# EUROPÄISCHE PATENTSCHRIFT

(11) **EP 3 806 515 B1**
(45) Veröffentlichungstag und Bekanntmachung des Hinweises auf die Patenterteilung: **22.07.2026**
(21) Anmeldenummer: 20200531.0
(22) Anmeldetag: 07.10.2020
(51) Int. Cl.: H04L 9/40, H04L 67/12, H04L 67/00, H04L 67/025, H05B 47/19, G08B 13/14

(54) **VORRICHTUNG INNERHALB EINES MASTS UND VERFAHREN**
DEVICE WITHIN A MAST AND METHOD
DISPOSITIF DANS UN MÂT ET PROCÉDÉ

(30) Priorität: 10.10.2019 DE 102019007058
(43) Veröffentlichungstag der Anmeldung: 14.04.2021
(73) Patentinhaber: CGF Counsel Group Frankfurt AG, 60549 Frankfurt (DE)
(72) Erfinder: RUPP, Harald, 85416 Langenbach (DE); TREIBER, Wilhelm, 96253 Untersiemau-Ziegelsdorf (DE)
(74) Vertreter: Ter Meer Steinmeister & Partner

(56) Entgegenhaltungen:
- EP-A1- 2 884 312
- EP-A1- 3 151 509
- EP-A2- 2 267 969
- WO-A1-2017/200627
- DE-A1- 102007 018 741
- DE-U1- 202014 010 323
- US-A1- 2005 015 810
- US-A1- 2017 272 625
- US-A1- 2017 301 220
- US-B1- 8 558 413
- ANONYMOUS: "R-2700 Series RUGGEDISED ROUTER for installation in street light poles and vehicles", 23 September 2016 (2016-09-23), pages 1 - 9, XP093137186, Retrieved from the Internet <URL:https://cdn.starwebserver.se/shops/acandia2/files/garderos-r-2700-series_20160923_en.pdf?_=1504590671> [retrieved on 20240304]

## Beschreibung

### TECHNISCHES GEBIET DER ERFINDUNG

Die Erfindung betrifft eine Vorrichtung, beispielsweise eine Netzwerkkomponente, beispielsweise ein aktives Kopplungselement in einem Netzwerk, wie Netzwerkweiche oder Netzwerkrouter, die mittels ihres Gehäuses betriebsbereit in einem Mast angeordnet ist. Die Erfindung betrifft zudem ein Verfahren zur Inbetriebnahme der Vorrichtung. Die Erfindung betrifft zudem ein Verfahren zum Betreiben eines Peripheriegeräts mittels der Vorrichtung. Die Erfindung betrifft zudem ein Computerprogramm-Produkt.

### TECHNISCHER HINTERGRUND

Ein Mast ist ein allgegenwärtiger Bestandteil der städtischen und ländlichen Landschaft. Beispielsweise kann ein Lichtmast entlang einer Straße oder eines Gehwegs angeordnet sein, um einem Autofahrer und/oder Fußgänger zu helfen, nachts besser zu sehen bzw. sich besser zu orientieren. Zusätzlich oder alternativ kann an einen Mast ein Verkehrszeichen, wie Ampel oder Verkehrsschild, angeordnet sein, das zur Steuerung eines Verkehrsflusses auf der Straße oder dem Gehweg eingesetzt wird. Zusätzlich oder alternativ kann an einem Mast ein Beobachtungs- oder Überwachungsgerät, wie eine Kamera oder ein Verkehrszähler, angeordnet sein, der zur Beobachtung und Überwachung von Plätzen oder Straßen dient.

Ein derartiger Mast ist bevorzugt ein Element eines sogenannten "Smart City"- Konzepts. "Smart City" ist dabei ein Sammelbegriff für ein gesamtheitliches Entwicklungskonzept, das darauf abzielt, eine Landschaft, insbesondere Städte, effizient, technologisch fortschrittlich, ökologisch und sozial inklusiv zu gestalten. Diese Konzepte sollen energieeffizient, emissionsarm, sicher und kostengünstig sein, um Zukunftsthemen, wie eine flächendeckende Breitbandvernetzung, eine flächendeckende E-Mobilität, eine Verkehrsbeobachtung bzw. - überwachung und/oder eine erhöhte Sicherheit zu ermöglichen.

So wird in der DE 10 2017 215 079 A1 ein Verfahren zum Erfassen von Verkehrsteilnehmern auf einem Verkehrsweg beschrieben.

So wird in der US 2019/0107273 A1 ein Verfahren zum Konfigurieren einer Sensorplattform einer Straßenlaterne vorgeschlagen, um eine Beleuchtung energieeffizienter zu machen, beispielsweise durch Zählen oder Detektieren von Verkehrsteilnehmern.

In der DE 20 2007 011 309 U1 werden Masten eines Straßenbeleuchtungssystems mit öffentlich zugänglichen Steckdosen ausgestattet, um beispielsweise Verkehrs- oder Transportmittel,
insbesondere Elektrofahrzeuge, elektrisch aufladen zu können, oder auch, um ein Benutzerendgerät, wie einen Laptop oder ein Smartphone an dem Straßenbeleuchtungssystem
aufladen zu können. Der Zugang zur Steckdose ist dabei zunächst versperrt, um Unberechtigten, die Energie nicht kostenlos zur Verfügung zu stellen. Der Zugang zur Steckdose kann von einem Benutzer freigeschaltet werden, indem sich ein Benutzer an einem Terminal oder einem Webportal authentisiert, wodurch ein elektromechanischer Schieber am Mast die Steckdose freigibt.

In der US 2019/0273313 A1 wird ein Mast beschrieben, der neben Beleuchtungsmitteln und Verkehrsschildern auch HF-Antennen trägt und im Inneren des Mastes eine konfigurierbare Gitterstruktur zum Beherbergen von Funkeinheiten und Spannungsversorgung aufweist. Eine Masttür ist dabei offen, um Zugang zu den beherbergten Einheiten zu erhalten.

In der US 2019/0226672 A1 wird vorgeschlagen, einen Lichtmast mit einem Kommunikationsmodul auszugestalten. Dieses Kommunikationsmodul ermöglicht eine Verbindung mit einem Netzwerk, um an dem Lichtmast befindliche Antennen in mobile Kommunikationsnetze, wie WLAN, GSM, LTE etc., einzubinden und beinhaltet Netzwerkweichen, Gateways und Router. Zudem kann der Lichtmast mit einem Energiemodul ausgestattet werden, um eine Energieversorgung für Peripheriegeräte, wie Sensoren, beispielsweise über das Energienetz oder aber auch über Datenleitungen mittels Power on Ethernet bereitzustellen. Mittels des Energiemoduls kann die Energie verwaltet werden. Eine abschließbare Tür am Lichtmast soll Fußgänger daran hindern, an diese Module zu gelangen.

WO 2017/200 627 A1 beschreibt eine konfigurierbare Plattform für Sensoren auf einem Straßenlicht. An dem Straßenlicht ist ein Straßenlichtkontroller angebracht.

US 2017/0301220 A1 zeigt einen modularen Ansatz, um eine Laterneneinheit mit einem optischen Sensor auszustatten. Dabei ist die Laterneneinheit an einem Laternenmast angebracht und der optische Senor außerhalb der Laterneneinheit angebracht.

DE 20 2014 010323 U1 betrifft einen Straßenbeleuchtungsmast, umfassend mindestens eine Sensoreinrichtung zum Ermitteln von Umwelt- und/oder Verkehrsdaten.

Anonymus: "R-2700 Series RUGGEDISED ROUTER for installation in street light poles and vehicles, 23. September 2016 (2016-09-23), Seiten 1-9, XP093137186 betrifft eine Hardwarespezifikation eines Routers zur Installation in einem Straßenbeleuchtungsmast.

Die Smart City Konzepte benötigen stets ein Netzwerk. Dieses Netzwerk ist ein kritisches Netzwerk, das Cyber-Angriffen ausgesetzt sein kann. Problematisch bei den bekannten Lösungen ist es, dass die Kommunikation zwischen einer entfernten Netzwerkkomponente, bspw. einem Server, einer Basisnetzwerkkomponente (Backbone-Komponente), und einem Peripheriegerät nicht weiter abgesichert ist. Ein Angreifer, der beispielsweise das Peripheriegerät manipulieren möchte, wird bislang nicht bei der entfernten Netzwerkkomponente erkannt und kann so erheblichen Schaden in dem Netzwerk anrichten, beispielsweise indem er eine Licht- oder Ampelsteuerung manipuliert, einen Ladevorgang für ein Elektrofahrzeug sabotiert und/oder unerlaubt Daten von Sensoren abzweigt. Auch die in der Datenkommunikation verwendeten sicherheitsrelevanten Daten, wie private Schlüssel, Zertifikate, IP-Adressen oder Passwörter könnten so in unerlaubter Weise ausgelesen werden.

Alle bisherigen Lösungen zielen darauf ab, den Lichtmast selbst besser abzusichern, insbesondere durch mechanische Verriegelungen und Schlösser oder Sensoren an der Masttür. Derartige Lösungen sind teuer und auch ineffizient, da die Masten auch in entlegenen Gegenden aufgestellt sind.

### ZUSAMMENFASSUNG DER ERFINDUNG

Die Erfindung wird in den beigefügten Ansprüchen definiert.

Der Erfindung liegt die Aufgabe zu Grunde, eine Vorrichtung zu schaffen, die beispielsweise als Netzwerkkomponente in einer Smart-City Umgebung eine Datenkommunikation zwischen einer entfernten Netzwerkkomponente und einem Peripheriegerät sicherer ausgestaltet. Insbesondere soll mit der Vorrichtung, beispielsweise einer Netzwerkweiche oder einem Router, erreicht werden, dass ein Angriff oder Manipulationsversuch auf die Datenkommunikation frühzeitig erkannt wird und an die entfernte Netzwerkkomponente gemeldet wird. Zudem sollten vertrauliche bzw. sicherheitsrelevante Informationen, beispielsweise aus einem Speicher der Vorrichtung oder von einem Peripheriegerät bereitgestellte Daten, nicht abgegriffen werden können.

Eine weitere Aufgabe ist die Einhaltung des Datenschutzes, denn öffentlich erfasste Daten unterliegen der Vertraulichkeit und müssen vor unberechtigten Zugriffen geschützt werden.

Zudem soll eine bestehende Infrastruktur weitestgehend weiterverwendet werden können, also der Austausch von bereits installierten Masten zur Bereitstellung zusätzlicher Funktionalität vermieden werden. Auch soll an den bestehenden Masten keine bauliche Veränderung, wie Vergrößern einer Masttür, Anbringen von Sensorik oder Schaltelementen, durchgeführt werden müssen.

Zusätzlich soll mit minimalem Aufwand maximale Funktionalität hergestellt werden, das heißt ein Verkabelungsaufwand im Mast sollte verringert werden.

Die Aufgabe wird durch die in den unabhängigen Patentansprüchen beschriebenen Merkmale gelöst. Vorteilhafte Ausgestaltungen der Erfindung sind in den abhängigen Ansprüchen angegeben.

Erfindungsgemäß wird eine Vorrichtung, insbesondere eine Netzwerkkomponente, vorgeschlagen, die mittels ihres Gehäuses betriebsbereit innerhalb eines Masts angeordnet ist. Die Vorrichtung weist einen Sensor am Gehäuse der Vorrichtung zum Bereitstellen eines Sensorsignals auf. Die Vorrichtung weist zudem eine Kontrolleinheit im Inneren der Vorrichtung auf. Diese Kontrolleinheit umfasst zumindest einen ersten Datenanschluss eingerichtet zum

Übertragen eines Datensignals zwischen der Vorrichtung und einer vom Mast entfernten Netzwerkkomponente. Diese Kontrolleinheit umfasst zumindest einen zweiten Datenanschluss eingerichtet zum Übertragen eines Datensignals zwischen der Vorrichtung und einem Peripheriegerät. Diese Kontrolleinheit umfasst einen Sensorsignalanschluss zum Empfangen des Sensorsignals. Diese Kontrolleinheit ist eingerichtet zum Weiterleiten einer Datenkommunikation zwischen der entfernten Netzwerkkomponente und dem Peripheriegerät. Die Kontrolleinheit ist auch eingerichtet zum Auswerten des empfangenen Sensorsignals, zum Erkennen einer Änderung des Sensorsignals und zum Alarmieren der entfernten Netzwerkkomponente, wenn die Änderung des Sensorsignals durch die Kontrolleinheit erkannt wird.

Die Vorrichtung ist dabei eine aktive Netzwerkkomponente eines Netzwerkes, also ein physisches Gerät, dass für die Kommunikation und Interaktion zwischen der vom Mast entfernten Netzwerkkomponente und dem Peripheriegerät erforderlich ist. Die Vorrichtung kann beispielsweise ein Gateway, ein Router, eine Netzwerkbrücke, ein Modem, ein drahtloser Zugangspunkt, eine Netzwerkweiche (Switch), ein Netzwerkverteiler (Hub) und /oder ein Repeater sein, beziehungsweise beinhalten. Die Vorrichtung kann zudem eine hybride Netzwerkkomponente, wie eine Mehrschicht-Netzwerkweiche (=Multilayer-Switch), ein Protokollkonverter, ein Brückenrouter, ein Proxy-Server, eine Firewall, ein Netzwerkadressübersetzer, ein Multiplexer, ein Netzwerk-Interface-Controller sein, beziehungsweise beinhalten.

Bevorzugt ist die Vorrichtung eine Netzwerkweiche. Das Netzwerk ist bevorzugt ein Metropolitan Area Network, kurz MAN. Das Netzwerk kann in einer bestimmten Bus-Topologie, beispielsweise Stern-Bus oder in Serie, sogenanntes Daisy-Chaining, aufgebaut sein. Beim Daisy Chain (engl. ,Gänseblümchenkette') bezeichnet man eine Anzahl von Hardware-Komponenten, die in Serie miteinander als Netzwerk verbunden sind. Dabei ist die erste Komponente, der erste Mast, direkt mit der entfernten Netzwerkkomponente verbunden. Die weiteren Komponenten, die weiteren Masten, sind nun jeweils mit ihren Vorgängern verbunden (Reihenschaltungsprinzip) und so entsteht eine Kette, die daisy chain. Das Signal zu und von einer Vorrichtung in einem Mast geht nun über seine Vorgänger bis zur Rechenanlage hin.

Die Vorrichtung umfasst ein Gehäuse. Das Gehäuse umfasst die Vorrichtung mit Sensor und Kontrolleinheit. Das Gehäuse dient als Schutz der Vorrichtung gegen Berührung, Eindringen von Fremdkörpern und Wasser sowie Stoßfestigkeit. Bevorzugt weist das Gehäuse die Schutzart IP67 auf. Das Gehäuse ermöglicht den Betrieb der Vorrichtung bei einem

Umgebungstemperaturbereich von -20 bis +85°C, Umgebungsluftfeuchtigkeit von 5 bis 95%. Das Gehäuse sollte eine Kühlleistung von 1,0 K/W haben.

Das Gehäuse weist bevorzugt maximale Außenmaße auf, die einen einfachen Einbau (Installation) und auch Ausbau (Deinstallation, Wartung, Reparatur) der Vorrichtung in einen Mast ermöglichen. Das Gehäuse weist bevorzugt minimale Außenmaße auf, die es ermöglichen, dass das Gehäuse als Kühlkörper der Vorrichtung dient, wobei auf innenliegende Kühlkörper oder Lüfter oder aufwendige Hitzeableitungen (Heat-Pipes) verzichtet wird, wodurch die Vorrichtung weiter miniaturisiert und in der Komplexität reduziert wird.

Die Vorrichtung ist innerhalb eines stationären Mastes angeordnet. Dabei ist die Vorrichtung im Mast fixiert. Ein Mast ist hierbei ein Bauwerk mit zumindest einem hohlen pfeiler- bzw. pfostenähnlichen Bereich, dessen Grundfläche im Vergleich zu seiner Höhe vergleichsweise gering sein kann. Der Mast dient vorrangig zur Befestigung von Funktionseinheiten, wie beispielsweise von Beleuchtungsmitteln (Lichtmast für Straßenbeleuchtung, Flutlicht, Wegelicht, Leuchtreklame) und/oder Einheiten zur Überwachung und/oder Leitung eines Verkehrs (Wegweiser, Lichtsignalanlagen, Lichtzeichenanlagen, Verkehrsbeschilderung, Mautbrücken, Verkehrszähler) und/oder elektrischer Komponenten (Stromleitungen, Antennen).

Die Vorrichtung ist dabei beispielsweise ein integraler Bestandteil des Masts oder - bevorzugt - als zusätzliche Komponente in den Mast einbau- und ausbaubar. Dazu hat der Mast einen von außen zugänglichen hohlen Abschnitt, der mit einer Masttür oder Mastklappe verschließbar ist. Damit ist die Vorrichtung sicher im Mast verstaut und gegenüber Umwelteinflüssen, wie Feuchtigkeit, Kälte und Wärme zusätzlich geschützt. Zudem wird so die bestehende Infrastruktur der Masten weiterverwendet und ein Austausch von Masten zur Bereitstellung zusätzlicher Funktionalität vermieden.

Die Vorrichtung ist betriebsbereit im Mast angeordnet. Betriebsbereit in diesem Zusammenhang bedeutet, dass die Vorrichtung mit Energie versorgt ist und fix verbaut ist. Bevorzugt wird die Energieversorgung für die Vorrichtung innerhalb des Mastes zusätzlich zur Energieversorgung einer Funktionseinheit des Mastes bereitgestellt. Beispielsweise könnte die Energieversorgung
für die Vorrichtung von der Energieversorgung einer Funktionseinheit des Mastes abgezweigt sein.

Die Vorrichtung umfasst einen Sensor, auch als Detektor oder (Messgrößen- oder Mess-) Aufnehmer oder (Mess-)Fühler bezeichnet. Der Sensor ist ein technisches Bauteil, das bestimmte physikalische Eigenschaften (z. B. Wärmemenge, Temperatur, Feuchtigkeit, Druck,

Schallfeldgrößen, Helligkeit, Beschleunigung) qualitativ oder als Messgröße quantitativ erfassen kann. Diese Größen werden mittels physikalischer Effekte erfasst und in ein von der Kontrolleinheit verarbeitbares elektrisches Sensorsignal umgeformt und bereitgestellt. Dabei kann die Kontrolleinheit die Umformung zur Bereitstellung vornehmen oder der Sensor nimmt diese Umformung vor und stellt das Sensorsignal bereit.

Der Sensor ist beispielsweise am Gehäuse befestigt. Bevorzugt ist der Sensor dazu im Inneren des Gehäuses angeordnet und mittels eines Durchgangs oder einem transparenten Teilbereich des Gehäuses für die zu erfassende Eigenschaft eingerichtet, um die außen am Gehäuse vorherrschende physikalische Eigenschaft auch im Inneren des Gehäuses detektieren zu können. Der Sensor kann alternativ auch im Gehäuse angeordnet sein, wenn das Erfassen der physikalischen Eigenschaft nicht vom Vorhandensein des Gehäuses beeinträchtigt ist, beispielsweise zum Detektieren einer Bewegung der Vorrichtung.

Die Kontrolleinheit hat zumindest einen ersten Datenanschluss zum Übertragen eines Datensignals. Über dieses Datensignal kann auch zusätzlich eine Versorgungsenergie für die Vorrichtung bzw. die Kontrolleinheit empfangen werden, um die Betriebsbereitschaft innerhalb des Mastes herzustellen. Das Datensignal wäre dann beispielsweise mit einem Power-on-Ethernet Signal kombiniert.

Der zumindest eine erste Datenanschluss dient zur Übertragung eines Datensignals zwischen der Vorrichtung und einer entfernten Netzwerkkomponente, beispielsweise eine Komponente eines Basisnetzwerks (englisch Backbone) und/oder eines Rechenzentrums und/oder eines Servers. Die Entfernung zwischen Mast und dieser entfernten Netzwerkkomponente kann von wenigen Metern bis zu mehreren 100 Kilometern betragen.

Bevorzugt ist der zumindest erste Datenanschluss mit einem ersten Anschluss der Vorrichtung verbunden, wobei weiter bevorzugt die Kontrolleinheit zumindest zwei erste Datenanschlüsse jeweils eingerichtet zum Übertragen eines Datensignals zwischen der Vorrichtung und zumindest der vom Mast entfernten Netzwerkkomponente aufweist und wobei noch weiter
bevorzugt jeder erste Datenanschluss jeweils mit einem ersten Anschluss der Vorrichtung verbunden ist. Somit kann die Vorrichtung mit mehr als einer entfernten Netzwerkkomponente
verbunden sein oder eine größere Datenbandbreite für die Peripheriegeräte bereitstellen. Der erste Anschluss ist beispielsweise ein small form-factor plugabble, kurz SFP, Anschluss, um Platz einzusparen.

Die Kontrolleinheit hat zumindest einen zweiten Datenanschluss zum Übertragen eines Datensignals. Über dieses Datensignal kann auch zusätzlich eine Versorgungsenergie für das Peripheriegerät von der Vorrichtung bereitgestellt werden, um die Betriebsbereitschaft, insbesondere die Energieversorgung, des Peripheriegeräts herzustellen. Das Datensignal wäre dann beispielsweise mit einem Power-on-Ethernet Signal kombiniert.

Bevorzugt ist der zumindest zweite Datenanschluss mit einem zweiten Anschluss der Vorrichtung verbunden, wobei weiter bevorzugt die Kontrolleinheit zumindest vier zweite Datenanschlüsse jeweils eingerichtet zum Übertragen eines Datensignals zwischen der Vorrichtung und einem Peripheriegerät aufweist und wobei noch weiter bevorzugt jeder zweite Datenanschluss jeweils mit einem zweiten Anschluss der Vorrichtung verbunden ist. Die Anzahl zweiter Datenanschlüsse ist hier nicht beschränkt und könnte auch acht, vierundzwanzig oder mehr sein. Damit ermöglicht eine Vorrichtung eine große Funktionalität an nur einem Mast. Der zweite Anschluss ist beispielsweise ein RJ45 konformer Anschluss.

Ein Datensignal über jeden zweiten Datenanschluss kann individuell verschlüsselt werden. Die Datensignale verschiedener zweiter Datenanschlüsse sind somit untereinander nicht einsehbar, es können demnach verschiedene Serviceanbieter über die gleiche Vorrichtung 1 an verschiedene Peripheriegeräte angeschlossen werden, ohne dass die Serviceanbieter den Datenverkehr untereinander abhören können.

Als Peripheriegerät wird erfindungsgemäß jegliche Funktionseinheit am Mast angesehen. Das Peripheriegerät kann dabei ein Sensor oder ein Aktor sein. Es kann sich dabei um eine Funktionseinheit des Mastes selbst handeln, also beispielsweise ein Beleuchtungsmittel, eine Lichtzeichenanlage, eine Lichtsignalanlage, eine Mautkomponente und/oder eine Antenne sein. Zusätzlich oder alternativ zur Funktionseinheit des Mastes kann das Peripheriegerät auch ein am Mast zu installierendes Gerät sein, wie eine Verkehrsüberwachungseinheit, eine zusätzliche Lichtsignalsteuerung, eine Kamera, ein Drahtlosnetzwerk-Zugangspunkt (WLAN-AP), eine Mobilfunkbasisstation, eine Elektrofahrzeug-Ladestation, und der gleichen mehr. Beispielsweise kann das Peripheriegerät eine Smart City Komponente sein, wie eine Komponente eines "Smart Reallabors", mit zusätzlicher intelligenter Sensorik sein, die eine Erfassung unterschiedlichster Informationen der Umgebung insbesondere zu Verkehr, Wetter und Umwelt ermöglichen und einen stationären Lichtmast zu einem multimodalen Objektträger mit adaptiver Beleuchtung, Energieversorgung und Breitbandanbindung für verschiedenartige Sensoren ausstattet.

Das Peripheriegerät umfasst dabei beispielsweise Sensorik zur Messung von Temperatur, Feuchte, Emissionen, Schadstoffe, Straßenbelag, etc. Das Peripheriegerät liefert beispielsweise

Informationen zum Verkehrsfluss als Basis für eine (zentrale oder auch lokale) Optimierung des Verkehrsflusses. Das Peripheriegerät stellt beispielsweise Informationen zur Verfügung, insbesondere eine Unterstützung bei der Suche nach einem freien Parkplatz oder auch Ladestationen für Elektrofahrzeuge oder für eine verbesserte Wahl der Verkehrsmittel auch in Verbindung mit einer aktuellen Wetterlage. Das Peripheriegerät erhöht beispielsweise die Sicherheit durch gezielte Überwachung mittels Kameras. Das Peripheriegerät könnte Teil einer "Gamification" sein.

Die Kontrolleinheit der Vorrichtung ist zum Weiterleiten einer Datenkommunikation zwischen der entfernten Netzwerkkomponente und dem Peripheriegerät eingerichtet. Diese Weiterleitung kann unidirektional oder bidirektional sein. Bevorzugt wird eine standardisierte Weiterleitung angewendet, beispielsweise nach dem IEEE 802.1x Protokoll, bei dem eine Media-Access-Control, kurz MAC, Adresse eines Peripheriegeräts zur Absicherung der Datenkommunikation verwendet wird.

Erfindungsgemäß ist die Kontrolleinheit dazu eingerichtet, das Sensorsignal vom Sensor der Vorrichtung zu empfangen und auszuwerten. Dabei kann die Kontrolleinheit eine Umformung eines physikalischen Effekts, der vom Sensor erfasst wurde, selbst vornehmen, um ein elektrisches Sensorsignal zur Auswertung zu erhalten. Alternativ ist der Sensor bereits mit einer Umformungseinheit ausgestattet und stellt ein elektrisches Sensorsignal bereit, das von der Kontrolleinheit nur abgefragt wird. Die Energieversorgung des Sensors erfolgt entweder über die Kontrolleinheit, über die Vorrichtung oder über den Sensor selbst. Der Sensor kann auch über ein Energy-Harvesting Verfahren mit Versorgungsenergie betrieben werden.

Die Kontrolleinheit ist weiter dazu eingerichtet, eine Änderung des Sensorsignals zu erkennen. Dazu erfolgt beispielsweise ein Vergleich eines Wertes des Sensorsignals, wie Amplitude, Frequenz, Phase, und/oder Zeitdauer mit einem vordefinierten Referenzwert.

Die Kontrolleinheit ist auch dazu eingerichtet, die entfernte Netzwerkkomponente zu alarmieren, wenn eine Änderung des Sensorsignals erkannt wurde.

Diese erfindungsgemäße Vorrichtung wertet also Sensorsignale eines Sensors am Gehäuse der Vorrichtung aus und alarmiert die entfernte Netzwerkkomponente bei entsprechender Abnormalität des Sensorsignals. Die Netzwerkkomponente kann dann als Gegenmaßnahme, die weitergeleitete Datenverbindung umgehend unterbrechen oder in eine Quarantänezone verlagern, um einem möglichen Angriff auf die Datenverbindung schnell entgegenzutreten und so, das Ausspähen von Daten oder Informationen der entfernten Netzwerkkomponente oder der Vorrichtung zu verhindern. Mit dieser Vorrichtung wird insbesondere ein Netzknoten, der weit entfernt von einem Rechenzentrum oder einem Backbone steht, aber vollen Zugriff auf die bereitgestellte Datenverbindung hat, weiter abgesichert, indem eine Sensorik vorgesehen ist, die einen möglichen Angriff sofort alarmiert.

In einer bevorzugten Ausgestaltung erzeugt der Sensor ein Sensorsignal in Abhängigkeit eines auf den Sensor einfallenden Lichtes, wobei die Änderung des Sensorsignals einen sprunghaften oder stetigen Anstieg der Sensorsignalamplitude aufgrund eines erhöhten Lichteinfalls ist. Der Sensor ist dabei bevorzugt ein Lichtsensor, auch als Fotosensor oder Fotodetektor bezeichnet. Mit einem derartigen Lichtsensor kann die Intensität von Licht mit geeigneter Wellenlänge gemessen werden. Der Sensor wandelt Licht mittels eines photoelektrischen Effekts in ein elektrisches Signal um oder zeigt einen von der einfallenden Strahlung abhängigen elektrischen Widerstand. Da die Vorrichtung im Inneren des Mastes angeordnet ist, ist im Normalbetrieb das Innere des Mast nicht zugänglich, beispielsweise durch eine verschlossene Mast-Tür oder Mastklappe, sodass im Normalbetrieb ein definierter nahezu konstanter, geringer Lichteinfall vom Sensor detektiert wird. Beim Öffnen des Mastes, beispielsweise durch Betätigen einer Masttür oder Mastklappe, steigt der Lichteinfall sprunghaft an. Der Sensor detektiert diesen Anstieg und alarmiert die entfernte Netzwerkkomponente.

In einer bevorzugten Ausgestaltung umfasst das Auswerten des Sensorsignals eine Mittelung der Werte des Sensorsignals über eine vordefinierte Zeitdauer (sogenannte Minihysterese). Auf diese Weise können kurzzeitige Schwankungen der zu erfassenden physikalischen Eigenschaft ausgemittelt werden. So wird beispielsweise ein Lichtblitz (Gewitter etc.) in der Nähe des Mastes nicht zwangsläufig das (Fehl-) Alarmieren der entfernten Netzwerkkomponente aufgrund abnormal hohem Lichteinfall auslösen. So wird beispielsweise ein Windstoß (Sturm etc.) am Mast nicht zwangsläufig das (Fehl-) Alarmieren der entfernten Netzwerkkomponente aufgrund abnormaler Bewegung des Gehäuses auslösen.

In einer weiter bevorzugten Ausgestaltung ist der Sensor ein Bewegungssensor, wobei die Änderung des Sensorsignals einen sprunghaften oder stetigen Anstieg der Sensorsignalamplitude
aufgrund eines Bewegens des Gehäuses der Vorrichtung ist. Der Bewegungssensor ist dabei beispielsweise ein Beschleunigungssensor, ein Neigungssensor oder ein Global Positioning System, GPS, Sender. Im Normalbetrieb ist die Vorrichtung im stationären Mast fixiert und somit keiner Bewegung ausgesetzt. Der Bewegungssensor detektiert jegliche Bewegung des Gehäuses, beispielsweise wenn ein Angreifer versucht, Anschlüsse der Vorrichtung zu manipulieren oder ein Dieb die Vorrichtung entwenden möchte. Sodann erfolgt das Alarmieren der entfernten Netzwerkkomponente.

In einer weiter bevorzugten Ausgestaltung ist der Sensor ein Schaltelement, wobei die Änderung des Sensorsignals einen sprunghaften oder stetigen Anstieg der Sensorsignalamplitude aufgrund eines Öffnens des Gehäuses der Vorrichtung ist. Dabei ist das Schaltelement derart im oder am Gehäuse angeordnet, dass ein Öffnen des Gehäuses die Änderung eines Schaltzustands bewirkt. Das Schaltelement ist beispielsweise ein Mikroschalter oder ein Reed-Kontakt oder ein Magnetkontakt vorgesehen.

Die Kontrolleinheit ist in einer bevorzugten Ausgestaltung dazu eingerichtet, zumindest sicherheitsrelevante Informationen, die in einem Speicher der Vorrichtung abgelegt sind, zu löschen und/oder zu überschreiben, wenn die Änderung des Sensorsignals durch die Kontrolleinheit erkannt wird. In einer verbesserten Ausgestaltung wird der gesamte Speicherinhalt der Vorrichtung gelöscht oder überschrieben. Dies erhöht die Sicherheit weiter, da nun bei einer erkannten Abnormalität, erkannt durch die Sensorsignaländerung, die sicherheitsrelevanten Informationen der Vorrichtung gelöscht werden. In der Folge wird keine Datenverbindung weitergeleitet werden und jedes Peripheriegerät verliert die Datenverbindung zur entfernten Netzwerkkomponente. Bevorzugt wird auch die Energieversorgung zu den Peripheriegeräten durch die Kontrolleinheit deaktiviert, sodass kein Zugriff auf die Daten der Peripheriegeräte mehr möglich ist.

Die vertraulichen bzw. sicherheitsrelevanten Informationen betreffen einerseits Konfigurationsinformationen der Vorrichtung, insbesondere IP-Adressen zur entfernten Netzwerkkomponente, private kryptographische Schlüssel der Vorrichtung, Zertifikate der Vorrichtung, Signaturschlüssel der Vorrichtung, eine Konfigurationsdatei mit Verbindungsparametereinstellungen oder andererseits Zugriffspasswörter, Konfigurationspasswörter, Black-Listen der bzw. von anderen Vorrichtung, White-Listen der bzw. von anderen Vorrichtung, Zugriffseinstellungen und dergleichen mehr. Auch Benutzernamen und Benutzerpasswörter zur Authentifizierung am Peripheriegerät zählen zu den sicherheitsrelevanten Informationen .Die Vorrichtung ist damit vollständig unkonfiguriert und kann so weder eine Datenverbindung zur entfernten Netzwerkkomponente herstellen noch eine

Datenverbindung zu/von einem Peripheriegerät weiterleiten. Eine Manipulation durch Datenabgriff oder Peripheriegerätefernsteuerung ist somit ausgeschlossen.

In einer weiter bevorzugten Ausgestaltung ist die Kontrolleinheit dazu eingerichtet, die sicherheitsrelevanten Informationen erst zu löschen und/oder zu überschreiben, wenn die Änderung des Sensorsignals einen sprunghaften oder stetigen Anstieg der Sensorsignalamplitude aufgrund des Öffnens des Gehäuses der Vorrichtung und/oder aufgrund eines Bewegens des Gehäuses der Vorrichtung ist. Das Bewegen der Vorrichtung oder auch das Öffnen des Gehäuses
der Vorrichtung wird stets als Angriff gewertet und somit das Löschen erzwungen. Nach dem Öffnen des Gehäuses oder dem Bewegen des Gehäuses ist die Vorrichtung vollständig unkonfiguriert und kann so weder eine Datenverbindung zur entfernten Netzwerkkomponente herstellen noch eine Datenverbindung zu/von einem Peripheriegerät weiterleiten. Eine Manipulation durch Datenabgriff oder Peripheriegerätefernsteuerung ist somit ausgeschlossen.

Es ist bevorzugt vorgesehen, zumindest zwei Sensoren vorgesehen. Damit kann eine Redundanz an Sensorsignalen ausgenutzt werden, um einen Angriff auf die Vorrichtung sicherer zu erkennen. Zudem kann auch ein zweistufiges Alarmieren geschaffen werden, beispielsweise wird bei Erkennen einer Sensoramplitude des ersten Sensors oberhalb eines Sensorsignalschwellwertes zunächst (nur) die entfernte Netzwerkkomponente alarmiert und bei Erkennen einer Sensoramplitude des zweiten Sensors oberhalb eines Sensorsignalschwellwertes werden weitere Maßnahmen in der Vorrichtung selbst getroffen, beispielsweise das Löschen bzw. das Überschreiben sensibler Informationen.

In einer bevorzugten Ausgestaltung umfasst die Vorrichtung weiter einen Energiespeicher zum Bereitstellen einer Versorgungsenergie für die Kontrolleinheit bei Wegfall oder Entfernen einer vorrichtungsexternen Energieversorgung. Somit wird eine Funktion des Sensors der Vorrichtung weiter sichergestellt und zusätzlich auch Energie zum Löschen bzw. Überschreiben des Speichers der Vorrichtung garantiert. Somit wird auch bei einem Abklemmen der Vorrichtung bei Diebstahl oder Wartung eine Betriebsbereitschaft auch ohne Versorgungsenergie ermöglicht.

Das Löschen bzw. das Überschreiben wird auch als "Zeroize" bezeichnet.

In einer weiter bevorzugten Ausgestaltung weist die Vorrichtung eine Energieversorgungseinheit auf. Die Energieversorgungseinheit weist einen ersten Energieanschluss (beispielsweise der erste Datenanschluss oder ein zusätzlicher Anschluss) zum Zuführen einer vorrichtungsexternen Versorgungsenergie auf. Die Energieversorgung weist zumindest einen zweiten

Energieanschluss zum Abgreifen einer Versorgungsenergie für das Peripheriegerät auf, wobei der zweite Energieanschluss ein Power-on-Ethernet, PoE, Energiesignal bereitstellt, das mit dem zu übertragenden Datensignal zwischen Vorrichtung und Peripheriegerät zusammengeführt wird. Auf diese Weise ist ein Versorgen jedes Peripheriegeräts und auch jeder Funktionseinheit des Mastes über einen der zweiten Datenanschlüsse der Vorrichtung möglich, wodurch ein Verkabelungsaufwand im Mast reduziert wird und auf das Bereitstellen einer zusätzlichen Energieversorgung der Peripheriegeräte verzichtet wird. Die Energieversorgung ist weiter bevorzugt ein Netzteil, dessen Energieverbrauch überwacht und protokolliert wird. Auf diese

Weise können Abnormalitäten der Vorrichtung selbst oder auch der Peripheriegeräte erkannt und der entfernten Netzwerkkomponente gemeldet werden.

In einer bevorzugten Ausgestaltung weist die Energieversorgungseinheit zumindest einen dritten Energieanschluss zum Abgreifen einer Versorgungsenergie für die Kontrolleinheit auf. Somit wird die Energie für die Kontrolleinheit durch die Vorrichtung selbst aufbereitet und muss nicht von extern bereitgestellt werden.

In einer weiter bevorzugten Ausgestaltung ist die Kontrolleinheit auf einer Leiterplatine mit Standardformfaktor, bevorzugt PC/104, angeordnet, wobei noch weiter bevorzugt die Energieversorgungseinheit auf einer zweiten Leiterplatine mit Standardformfaktor, bevorzugt PC/104, angeordnet ist. Dieser Industriestandard ermöglicht das Miniaturisieren der Vorrichtung, sodass diese in den Mast angeordnet werden kann, ohne bauliche Veränderungen am Mast vornehmen zu müssen. Zudem ist dieser Formfaktor geeignet, eine große Oberfläche für Komponenten der Vorrichtung bereitzustellen, sodass eine gute Wärmeableitung erfolgen kann.

Die Wahl eines gleichen Formfaktors ermöglicht zudem ein Anordnen mehrerer Platinen übereinander, ein sogenanntes "Stacking" und Verbinden mittels Steckverbinder. Damit wird die elektromagnetische Verträglichkeit der Komponenten untereinander verbessert.

In einer bevorzugten Ausgestaltung erfolgt ein Authentifizieren des Peripheriegeräts zum Weiterleiten der Datenkommunikation zwischen der entfernten Netzwerkkomponente und dem Peripheriegerät auf Basis der MAC Adresse des Peripheriegeräts, wobei weiter bevorzugt bei fehlgeschlagener Authentifizierung des Peripheriegeräts das Weiterleiten der Datenkommunikation von der Kontrolleinheit unterbunden wird. Dabei folgt die Datenkommunikation bevorzugt dem IEEE 802.1x Protokoll und ermöglicht eine abgesicherte Kommunikation. Die MAC-Adresse des Peripheriegeräts ist bevorzugt in der entfernten Netzwerkkomponente bekannt gemacht worden. Durch diese Absicherung ist ein an der
Vorrichtung eingerichtetes Peripheriegerät nicht austauschbar, ein anderes Peripheriegerät am zweiten Datenanschluss führt zu einer Deaktivierung der Datenverbindung zum Peripheriegerät.

Die Aufgabe wird zudem auch durch ein Verfahren zur Inbetriebnahme der hierin beschriebenen Vorrichtung mit den folgenden Verfahrensschritten gelöst: Übertragen eines Datensignals über zumindest einen ersten Datenanschluss der Vorrichtung zum Empfangen einer Konfigurationsinformation von einer entfernten Netzwerkkomponente, wobei die Vorrichtung bei der entfernten Netzwerkkomponente bekannt ist; Empfangen der Konfigurationsinformation von der entfernten Netzwerkkomponente in der Vorrichtung, wobei bevorzugt das Empfangen mittels Trivial File Transfer Protocol, TFTP, zum Initialisieren der Vorrichtung erfolgt; und
Herstellen einer Datenverbindung zwischen der Vorrichtung und der entfernten Netzwerkkomponente unter Verwendung der Konfigurationsinformation. Bevorzugt wird die Konfigurationsdatei kryptographisch verschlüsselt übertragen, wobei ein entsprechender Schlüssel zwischen entfernter Netzwerkkomponente und Vorrichtung ausgehandelt werden kann, beispielsweise unter Anwendung eines Diffie-Hellmann-Verfahrens oder sonstiger abgeleiteter Sitzungsschlüssel.

Die Aufgabe wird zudem auch durch ein Verfahren zum Betreiben eines Peripheriegeräts an einer hierin beschriebenen Vorrichtung gelöst, wobei nach der hier beschriebenen Inbetriebnahme der Vorrichtung die folgenden Verfahrensschritte erfolgen: Anschließen eines Datensignals an zumindest einen zweiten Datenanschluss der Vorrichtung zum Verbinden der Vorrichtung mit einem Peripheriegerät, wobei das Peripheriegerät vor dem Anschließen bei der entfernten Netzwerkkomponente bekannt gemacht wurde; Prüfen der Übereinstimmung der MAC-Adresse des Peripheriegeräts mit einer von der entfernten Netzwerkkomponente mitgeteilten MAC-Adresse durch die Vorrichtung; und Weiterleiten einer Datenverbindung der entfernten Netzwerkkomponente an das Peripheriegerät, wenn die MAC-Adresse des Peripheriegeräts mit der mitgeteilten MAC-Adresse übereinstimmt.

Zudem wird die Aufgabe durch ein Computerprogramprodukt gelöst, welches ausführbar in einer Kontrolleinheit der hierin beschriebenen Vorrichtung installiert ist und Mittel zum Ausführen der Verfahrensschritte der vorhergehend beschriebenen Verfahren aufweist.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind - bis auf speziell gekennzeichnete Ausnahmen - nicht als maßstabsgetreu anzusehen, es können einzelne Elemente der Figuren übertrieben groß bzw. übertrieben vereinfacht dargestellt sein.
Fig. 1 zeigt ein Ausführungsbeispiel eines vereinfachten Blockschaltbilds einer erfindungsgemäßen Vorrichtung innerhalb eines schematisch dargestellten Mast-Abschnitts;
Fig. 2 zeigt ein Ausführungsbeispiel eines vereinfachten Blockschaltbilds einer erfindungsgemäßen Vorrichtung;
Fig. 3 zeigt ein Ausführungsbeispiel eines vereinfachten Blockschaltbilds einer erfindungsgemäßen Vorrichtung;
Fig. 4 zeigt ein Ausführungsbeispiel eines Blockschaltbilds einer erfindungsgemäßen Vorrichtung;
Fig. 5 zeigt ein Ausführungsbeispiel eines Blockschaltbilds einer Energieversorgungseinheit einer erfindungsgemäßen Vorrichtung;
Fig. 6 zeigt ein Ausführungsbeispiel eines Ablaufdiagramms eines erfindungsgemäßen Verfahrens;
Fig. 7 zeigt ein Ausführungsbeispiel eines Ablaufdiagramms eines weiteren erfindungsgemäßen Verfahrens;
Fig. 8 zeigt ein maßstabsgetreues Ausführungsbespiel eines beispielhaften Mastes, in den eine erfindungsgemäße Vorrichtung angeordnet wird;
Fig. 9 zeigt drei maßstabsgetreue Ausführungsbespiele für beispielhafte Mastöffnungen, durch die hindurch eine erfindungsgemäße Vorrichtung in einen Mast angeordnet wird;
Fig.10 zeigt ein Ausführungsbespiel eines erfindungsgemäßen Systems aus Mast mit darin angeordneter Vorrichtung;
Fig.11 zeigt ein Ausführungsbespiel eines erfindungsgemäßen Systems bestehend aus drei Masten in einer Verkehrsüberwachung in Stern-Topologie; und
Fig.12 zeigt ein Ausführungsbespiel eines erfindungsgemäßen Systems bestehend aus drei Masten in einer Verkehrsüberwachung in Dais-Chain Topologie.

### DETAILLIERTE BESCHREIBUNG VON AUSFÜHRUNGSBEISPIELEN

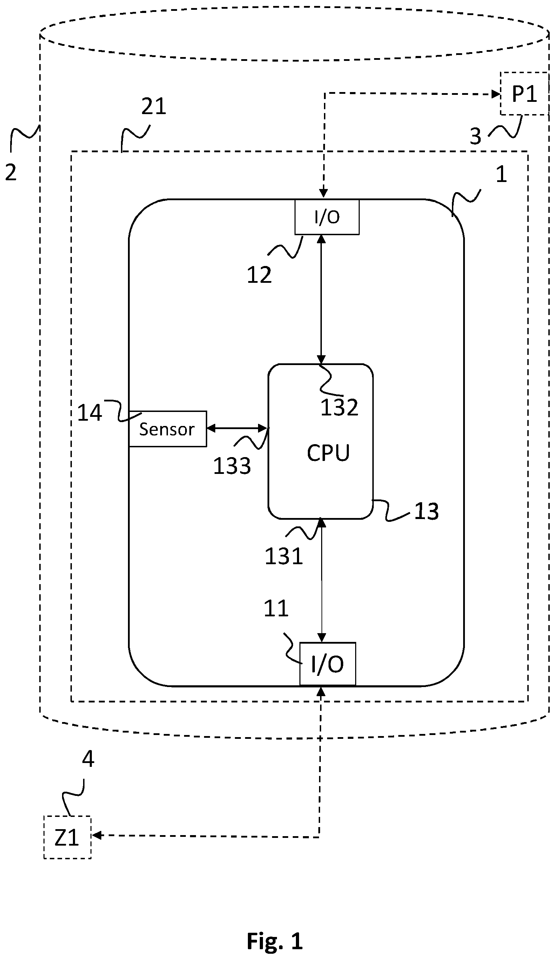

Fig. 1 zeigt ein Ausführungsbeispiel eines vereinfachten Blockschaltbilds einer erfindungsgemäßen Vorrichtung 1 innerhalb eines schematisch dargestellten Mast-Abschnitts eines Mastes 2. Mit diesem Ausführungsbeispiel ist es möglich Masten 2 von Städten, Kommunen und Firmen zu Kommunikations- und Steuerknoten auszubauen und so ein Smart-City Konzept zu ermöglichen.

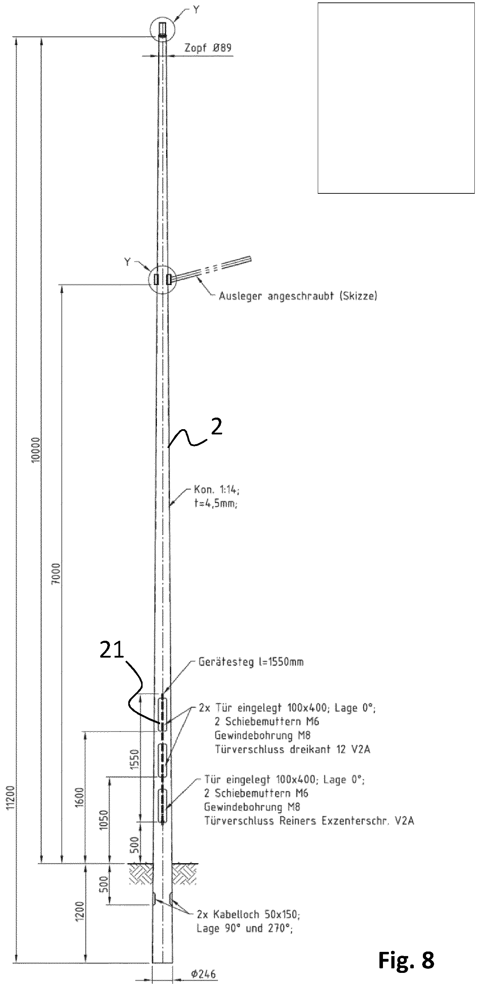

Der Mast 2 ist dabei ein Lichtmast, wie er beispielsweise in den nachfolgenden Figuren 8 bis 10 noch näher erläutert wird. Der Mast ist innen hohl und weist eine Mastöffnung 21 auf, die vorzugsweise durch eine Klappe bzw. Tür (nicht dargestellt) nahezu lichtdicht verschlossen
werden kann. Im Inneren des Masts 2 befindet sich eine erfindungsgemäße Vorrichtung 1, hier nachfolgend vereinfacht als Switch 1, also Netzwerkweiche bezeichnet.

Der Switch 1 wird in ein Metallgehäuse der Schutzart IP67 integriert. Der Switch 1 stellt eingangsseitig zumindest einen ersten Anschluss 11 bereit, der im Switch 1 an einen ersten Datenanschluss 131 einer Kontrolleinheit 13 angeschaltet ist. Der erste Datenanschluss 131 ist zum Übertragen eines Datensignals zwischen dem Switch 1 und einem vom Mast 2 entfernten Netzwerkkomponente, nachfolgend vereinfacht Rechenzentrum 4 oder Backbone 4 bezeichnet, eingerichtet. Das Datensignal am ersten Anschluss 11 hat beispielsweise eine Bitrate von 10 Gbit, könnte aber auch nur 1Gbit oder 100 Gbit haben. Das Rechenzentrum ist beispielsweise ein Stadt- oder Landesrechenzentrum, das mitunter mehrere hundert Kilometer vom Mast 2 entfernt ist. Das Netzwerk ist ein Metropolitan Area Network, kurz MAN. Bevorzugt wird das Datensignal über Lichtwellenleiter an den ersten Anschluss 11 angeschlossen. Das Datensignal kann dabei in einem Mono-Mode Verfahren übertragen werden, wenn die Entfernung zwischen Vorrichtung 1 und entfernter Netzwerkkomponente 4 einen bestimmten Schwellwert überschreitet. Das Datensignal kann dabei in einem Multi-Mode Verfahren übertragen werden, wenn die Entfernung zwischen Vorrichtung 1 und entfernter Netzwerkkomponente 4 einen bestimmten Schwellwert unterschreitet.

Ausgangsseitig hat der Switch 1 zumindest einen zweiten Anschluss 12, der im Switch 1 an einen zweiten Datenanschluss 132 der Kontrolleinheit 13 angeschaltet ist. Der zweite Datenanschluss 132 ist zum Übertragen eines Datensignals zwischen dem Switch 1 und Peripheriegerät 3 eingerichtet. Das Datensignal am zweiten Anschluss 12 ist beispielsweise eine 1 Gbit Ethernet Schnittstelle. Bevorzugt hat dieses Datensignal eine Power-On-Ethernet, PoE, Funktionalität, über die eine vordefinierte maximale Leistung, beispielsweise 25W, an das Peripheriegerät 3 übertragen werden können. Bevorzugt wird das Datensignal über Kupfer an den zweiten Anschluss 12 angeschlossen.

Der Switch 2 hat am Gehäuse einen Sensor 14 verbaut. Dieser Sensor 14 ist in Fig. 1 ein Lichtsensor, der an einen Sensorsignalanschluss 133 an die Kontrolleinheit 13 angeschlossen ist. Der Lichtsensor ist von Innen am Gehäuse des Switches 1 verbaut, um einfallendes Licht in die Mastöffnung 21 zu erfassen. Somit ist ein Teilbereich des Gehäuses des Switches 1 transparent für das einfallendes Licht, sodass der hinter dem Bereich im Gehäuse befindliche Sensor 14 das einfallende Licht detektieren kann. Alternativ ist das Gehäuse mit einer Durchbohrung versehen, in das der Sensor 14 platziert ist, um das einfallende Licht detektieren zu können. Alternativ kann der Sensor 14 auch außen am Gehäuse des Switches 1 platziert werden.

Im Normalbetrieb ist die Mastöffnung verschlossen, sodass im Inneren des Mastes eine konstanter sehr geringer Lichteinfall detektiert wird. Eine Masttür könnte die Mastöffnung 21 des Mastes 2 auch nahezu lichtdicht verschließen. Wird nun die Mastöffnung 21 geöffnet, beispielsweise die Masttür oder Mastklappe (nicht dargestellt) entriegelt oder aufgeschlossen, also betätigt, so dringt wesentlich mehr Licht (auch nachts) in das Innere des Masts 2. Der Sensor 14 erfasst den höheren Lichteinfall und erzeugt einen Anstieg (beispielsweise sprunghaft oder stetig) der Sensorsignalamplitude über einen gewissen Zeitraum. In der Kontrolleinheit 13 wird das Sensorsignal ausgewertet und dieser Anstieg erkannt. Die Kontrolleinheit 13 bewertet dies als eine Abweichung vom Normalbetrieb und informiert (alarmiert) das Backbone 4 entsprechend. Der Alarm an die entfernte Netzkomponente 4 könnte erfolgen, wenn der Lichtsensor 14 eine vordefinierte Beleuchtungsstärke, beispielsweise größer 10 Lux oder größer 7 Lux detektiert. In der Kontrolleinheit 13 ist eine Auslöseverzögerung bzw. eine Mittelung der Sensorwerte (auch als Minihysterese bezeichnet) für eine bestimmte Zeitspanne vorgesehen. Dadurch werden Lichtschwankungen im Bereich von beispielsweise einigen 100ms nicht als Alarm zu bewerten. Somit wird kein Fehlalarm bei einem Gewitter ausgelöst.

Ein Alarmieren des Backbone 4 kann das Mitteilen einer ID des Switches 1 oder ein Standort des Mastes 2 oder beides mit einem entsprechenden Fehlercode (Lichteinfall detektiert) sein. Das Backbone 4 entscheidet über geeignete Maßnahmen. Es könnte den Vorfall als normal einstufen, wenn eine Wartung am Mast 2 in dem Backbone 4 bekannt ist. Es könnte den Vorfall als Angriff werten und die bestehende Datenverbindung zwischen Peripheriegerät 3 und Backbone 4 in einen Quarantänebereich umsiedeln und den Vorfall so weiter in einer abgesicherten Umgebung beobachten. Es könnte alternativ die Datenverbindung zum Switch 1 zu unterbinden oder den Switch veranlassen, den Datenverbindung zwischen Backbone 4 und Peripheriegerät 3 zu unterbrechen. Es könnte das Löschen des Speicherbereichs in der Kontrolleinheit 13 anordnen.

In jedem Fall ist der Switch 1 verbessert abgesichert und insbesondere die sensiblen Daten (IP-Adressen, private Schlüssel, Signaturschlüssel, Konfigurationsdaten, Passwörter) des Switches 1 werden so besser gesichert. Ein in einer verlassenen Gegend installierter Mast 2 mit darin angeordnetem Switch 1 mit direkter Verbindung zum Backbone 4 ist somit besser gegen Angriffe gesichert.

Der in Fig. 1 verwendete Sensor 14 kann alternativ oder zusätzlich auch ein Bewegungssensor oder ein Mikroschalter sein. Diese Sensorarten detektieren eine Bewegung des Gehäuses oder das Öffnen des Gehäuses des Switches 1. Diese Maßnahmen werden von der Kontrolleinheit direkt als ein Angriff gewertet und lösen ein sofortiges Löschen der o.g. sensiblen Daten im Speicher des Switches aus. Der Switch ist sodann nicht mehr konfiguriert und kann weder eine

Datenverbindung zu einem Backbone 4 noch zu einem Peripheriegerät 3 herstellen oder weiterleiten. Somit führt die Entnahme des Switches 1 oder das Öffnen des Switches 1 nicht zum unbefugten Manipulieren der Datenverbindung und ein Auslesen sensibler Daten oder Abgreifen von Informationen durch den Angreifer ist so wirksam unterbunden.

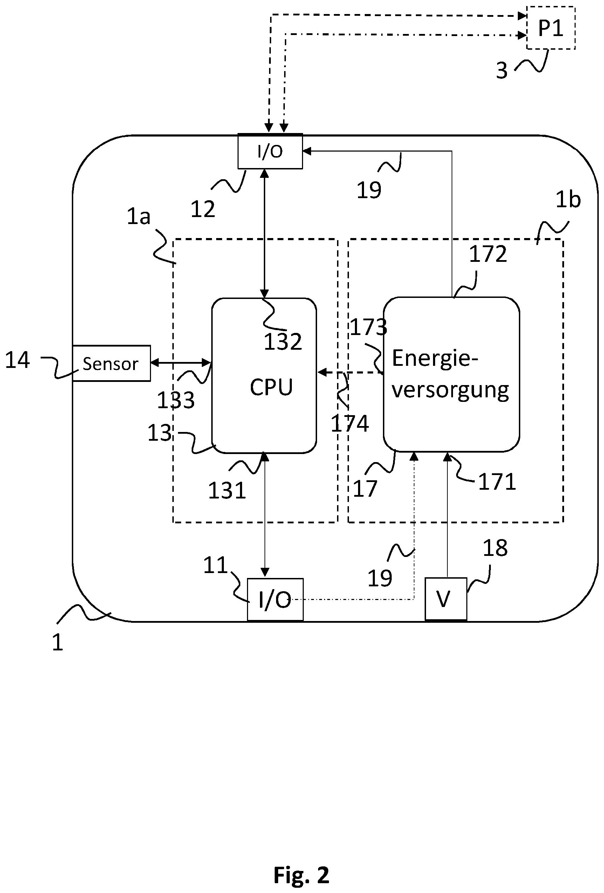

Fig. 2 zeigt ein Ausführungsbeispiel eines vereinfachten Blockschaltbilds einer erfindungsgemäßen Vorrichtung 1. Die Vorrichtung 1 der Fig. 2 entspricht der Vorrichtung 1 der Fig. 1 und weist lediglich weitere Elemente auf, auf die nachfolgend Bezug genommen wird. Die in Fig. 1 bereits vorgestellten Komponenten werden hier nicht wiederholt.

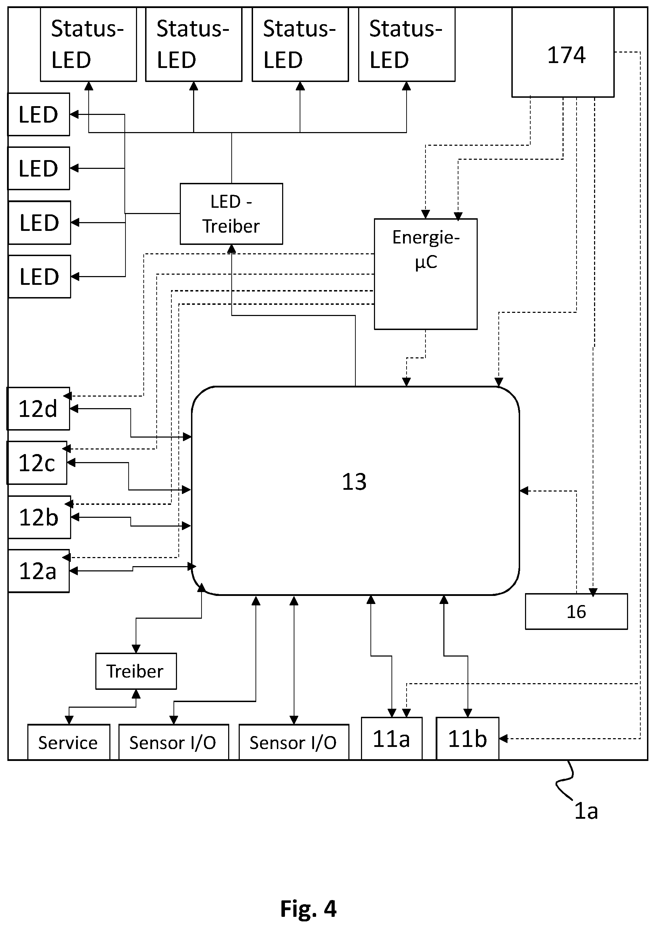

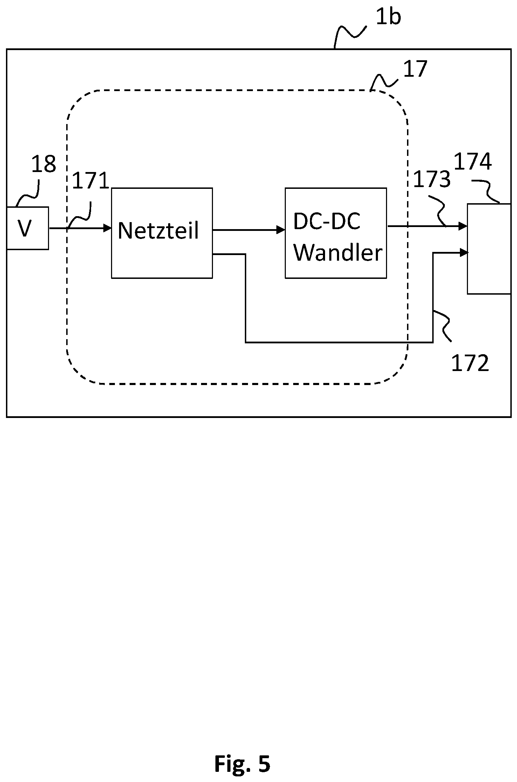

Die Vorrichtung 1, nachfolgend switch 1 genannt, weist andeutungsweise eine erste Platine 1a auf, die die Kontrolleinheit 13 umfasst. Die Platine 1a ist in Fig. 4 detaillierter beschrieben. Zudem weist der Switch 1 eine zweite Platine 1b auf, die eine Energieversorgungseinheit 17 aufweist. Die Platine 1b ist in Fig. 5 detaillierter beschrieben. Beide Platinen 1a, 1b sind über einen Verbindungsstecker 174 miteinander verbunden und werden gemeinsam in das Metallgehäuse des Switches 1 implementiert. Bevorzugt sind beide Platinen 1a, 1b Standartformfaktor-Platinen. Beide Platinen 1a, 1b weisen bevorzugt den Formfaktor PC/104 auf. Dieser Formfaktor PC/104 ermöglicht einen verkleinerten Aufbau des Switches 1 und durch diese verkleinerte Bauform ist eine Integration des Switches 1 in einen Mast 2 mit sehr geringem Durchmesser dennoch vereinfacht möglich. Beide Platinen 1a, 1b können jeweils einen vom Formfaktor PC/104 verschiedenen Formfaktor aufweisen. Der Formfaktor ermöglicht zudem ein Anordnen mehrerer Platinen übereinander, ein sogenanntes "Stacking" und Verbinden mittels Steckverbinder 174. Damit wird die elektromagnetische Verträglichkeit der Komponenten untereinander verbessert.

Der Switch 1 weist beispielsweise einen dritten Anschluss 18 auf, an den eine Energieversorgung angelegt wird. Dieser dritte Anschluss 18 wird einem Anschluss 171 der Energieversorgungseinheit 17 zugeführt. Alternativ, hier als Strich-Punkt-Linie dargestellt, wird eine Energieversorgung über den ersten Anschluss 11, beispielsweise als PoE-Signal, zur Verfügung gestellt. In diesem Fall kann der dritte Anschluss 18 entfallen und der Aufbau vereinfacht sich.

Die Energieversorgungseinheit 17 stellt eine Energieversorgung für das Peripheriegerät 3 über einen Energieausgang 172 bereit. Diese Energieversorgung wird als PoE Signal 19 an den zweiten Anschluss 12 des Switches 1 geschaltet und so, über einen Anschluss zusammen mit dem Datensignal des zweiten Datenanschlusses 132 der Kontrolleinheit 13 an das Peripheriegerät 3 bereitgestellt. Durch die Verwendung der PoE-Signale 19 vereinfacht sich der Verkabelungsaufwand im Mast 2 erheblich und die Peripheriegeräte 3 können vom Switch 1 mit Energie versorgt werden. Auf weitere externe Energiequelle(n) zur Versorgung der Peripheriegeräte 3 kann somit verzichtet werden.

Die Energieversorgungseinheit 17 stellt zudem auch eine Energieversorgung für die Kontrolleinheit 13 über einen Energieausgang 173 bereit. Diese Energieversorgung wird beispielsweise über einen Verbindungsstecker 174 ermöglicht. Auf weitere externe Energiequelle(n) zur Versorgung der Kontrolleinheit 13 kann somit verzichtet werden.

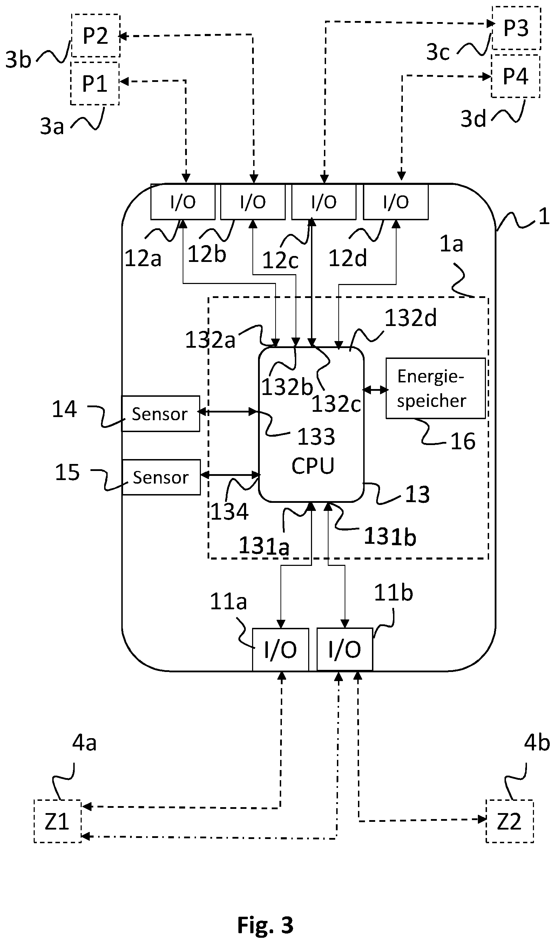

Fig. 3 zeigt ein Ausführungsbeispiel eines vereinfachten Blockschaltbilds einer erfindungsgemäßen Vorrichtung 1. Die Vorrichtung 1 der Fig. 3 entspricht der Vorrichtung 1 der Fig. 1 und der ersten Platine 1a der Fig. 2 und weist weitere Elemente auf, auf die nachfolgend Bezug genommen wird. Die in Fig.1 und Fig. 2 bereits vorgestellten Komponenten werden hier nicht wiederholt.

Im Unterschied zur Fig. 1 oder Fig. 2 sind in Fig. 3 nunmehr zwei erste Anschlüsse 11a, 11b am Switch 1 vorgesehen. Am ersten Anschluss 11a ist ein erstes Backbone 4a angeschlossen. Am zweiten Anschluss 11b ist ein zweites Backbone 4b angeschlossen. Dies erhöht die Bandbreite des Switches 1 und führt folglich zu einer verbesserten Funktionalität der Peripheriegeräte 3a bis 3d. Alternativ - in Fig. 3 als Punkt-Strich-Linie dargestellt ist am zweiten Anschluss 11b ein erstes Backbone 4a angeschlossen. Dies erhöht die Bandbreite des Switches 1 und führt folglich zu einer verbesserten Funktionalität der Peripheriegeräte 3a bis 3d. Es werden beispielsweise zwei 10Gbit SFP Module als Anschlüsse 11a, 11b verwendet. Die zwei ersten Anschlüsse 11a, 11b sind jeweils mit ersten Datenanschlüssen 131a, 131b der Kontrolleinheit 13 verbunden.

Im weiteren Unterschied zur Fig. 1 oder Fig. 2 sind in Fig. 3 nunmehr vier zweite Anschlüsse 12a, 12b, 12c, 12d am Switch 1 vorgesehen. Am zweiten Anschluss 12a ist ein erstes Peripheriegerät 3a angeschlossen bzw. anschließbar. Am zweiten Anschluss 12b ist ein zweites Peripheriegerät 3b angeschlossen bzw. anschließbar. Am zweiten Anschluss 12c ist ein drittes Peripheriegerät 3c angeschlossen bzw. anschließbar. Am zweiten Anschluss 12d ist ein viertes Peripheriegerät 3d angeschlossen bzw. anschließbar. Die vier zweiten Anschlüsse 12a, 12b, 12c, 12d sind jeweils mit zweiten Datenanschlüssen 132a, 132b, 132c, 132d der Kontrolleinheit 13 verbunden. Es können also gleichzeitig bis zu vier Peripheriegeräte 3 an einen Switch 1 angeschlossen werden. Die Zahl der anschließbaren Peripheriegeräte 3 ist erfindungsgemäß nicht einschränkend, es können bis zu 24 Peripheriegeräte 3 an einen Switch 1 angeschlossen werden. Beispielsweise wird jedes Peripheriegerät 3 mit einer 1Gbit Verbindung als Anschlüsse 12a, 12b, 12c, 12d bereitgestellt.

Im weiteren Unterschied zur Fig. 1 oder Fig. 2 sind in Fig. 3 nunmehr zumindest zwei Sensoren 14, 15 im Switch 1 vorgesehen. Der erste Sensor 14 ist dabei der in Fig. 1 bereits beschriebene Lichtsensor, dessen Sensorsignal an den Sensorsignalanschluss 133 der Kontrolleinheit 13 angeschlossen ist. Der zweite Sensor 15 ist dabei der in der Beschreibung der Fig. 1 bereits angedeutete Mikroschalter, dessen Sensorsignal (bzw. Schaltsignal) an einen zweiten Sensorsignalanschluss 134 der Kontrolleinheit 13 angeschlossen ist. Durch die Verwendung von zwei Sensoren 14, 15 und entsprechender Auswertung der Sensorsignale an den Anschlüssen 133, 134 der Kontrolleinheit 13 kann ein zweistufiges Alarmierungs- bzw. Schutzverfahren angewendet werden. So könnte bei Erkennen eines erhöhten Lichteinfalls durch den Lichtsensor 14 (=erste Stufe des Angriffs) nur die Backbones 4a, 4b entsprechend alarmiert werden und die in Fig. 1 bereits beschriebenen Maßnahmen ergriffen werden. So könnte bei Erkennen eines Öffnens des Gehäuses durch das Schaltelement 15 (=zweite Stufe des Angriffs) das Löschen/Überschreiben der sensiblen Daten aus dem Speicher des Switches 1 veranlasst werden. Damit wird die Betriebsfähigkeit des Netzwerks möglichst lange aufrechterhalten und ein Öffnen des Mastes 2 nicht automatisch zu einem Unterbrechen der Datenverbindung führen müssen. So können auch unangemeldete Wartungstätigkeiten beobachtet werden und die Funktionalität des Netzwerkes bleibt erhalten. Wird jedoch die zweite Stufe eines Angriffs detektiert, so können die sensiblen Daten zuverlässig gelöscht werden.

Im weiteren Unterschied zur Fig. 1 oder Fig. 2 ist in Fig. 3 nunmehr ein Energiespeicher 16 vorgesehen. Dieser Energiespeicher 17, beispielsweise ein Speicherkondensator mit mehreren 100 Millifarad bis mehreren Farad, stellt den Betrieb des Switches 1 auch bei kurzzeitigen Energieversorgungsschwankungen sicher und ermöglicht das Erkennen eines Angriffs auch bei entfernter Energieversorgung. So können die sensiblen Daten zuverlässig gelöscht werden, auch wenn die Energieversorgung bereits abgeschaltet ist.

Fig. 4 zeigt ein Ausführungsbeispiel eines Blockschaltbilds einer ersten Platine 1a einer erfindungsgemäßen Vorrichtung 1. Die Vorrichtung 1 der Fig. 4 entspricht der Vorrichtung 1 der Fig. 3 und weist weitere Elemente auf, auf die nachfolgend Bezug genommen wird. Die in Fig.1 bis 3 bereits vorgestellten Komponenten werden hier nur angedeutet. Dargestellt in Fig. 4 ist ein Blockschaltbild der Komponenten auf der ersten Platine 1a des Switches 1, das sogenannte "Carrier Board".

Die erste Platine 1a ist über einen Steckverbinder 174 mit der zweiten Platine 1b (Fig. 5) verbunden und erhält über den Steckverbinder drei unterschiedliche Spannungen, nämlich 50V; 5V und 3,3V von der zweiten Platine 1b. Ein Energie-µC stellt aus den bereitgestellten Spannungen eine Versorgungsspannung für die Kontrolleinheit 13 und PoE Signale für die vier
zweiten Anschlüssen 12a, 12b, 12c, 12d bereit. Die Anschlüsse 11a, 11b werden ebenfalls mit Energie versorgt. Die beiden Sensoren werden nicht auf der Platine 1a untergebracht, sondern an geeigneten Stellen am Gehäuse platziert und drahtgebunden - über Steckverbinder "Sensor I/O" - mit der Kontrolleinheit 13 verbunden. Wie bereits in Fig. 3 dargestellt, wird die Kontrolleinheit 13 mit zwei ersten Anschlüssen 11a, 11b und vier zweiten Anschlüssen 12a, 12b, 12c, 12d verbunden.

Zusätzlich sind 4 Status LED vorgesehen, die den Zustand des Switches 1 nach außen (außerhalb des Gehäuses des Switches 1) visualisieren, wobei eine der Status-LED anzeigt, ob eine Energieversorgung anliegt, eine der Status-LED anzeigt, ob der Switch eingeschaltet ist, eine dritte Status-LED zweifarbig ist und anzeigt, ob eine Datenverbindung mit dem Backbone 4a vorhanden ist, und eine vierte Status-LED zweifarbig ist und anzeigen, ob eine Datenverbindung mit dem Backbone 4a bzw. 4b (je nachdem wie beschaltet wurde) vorhanden ist. Zusätzlich sind 4 LED vorgesehen, die den Verbindungszustand mit dem jeweiligen Peripheriegerät 3a, 3b, 3c, 3d anzeigen. Diese LED werden über Durchbohrungen am Gehäuse oder transparente Teilbereiche im Gehäuse von außen sichtbar angeordnet.

Die Platine 1a verfügt über einen Service-Anschluss, über den mittels eines Treiber-Bausteins die Kontrolleinheit 13 aktualisiert und gewartet werden kann.

Fig. 5 zeigt ein Ausführungsbeispiel eines Blockschaltbilds einer zweiten Platine 1b einer erfindungsgemäßen Vorrichtung 1. Die Platine 1b der Fig. 5 entspricht der angedeuteten Platine
1b der Fig. 2 und weist weitere Elemente auf, auf die nachfolgend Bezug genommen wird. Die in Fig.1 bis 3 bereits vorgestellten Komponenten werden hier nicht wiederholt. Dargestellt in Fig. 5 ist ein Blockschaltbild der Komponenten auf der zweiten Platine 1b des Switches 1, das sogenannte "Power Board".

Die zweite Platine 1b weist beispielsweise den dritten Anschluss 18 auf, an den eine Energieversorgung, beispielsweise 110VAC bis 230VAC mit 50Hz oder 60Hz angelegt wird. Dieser dritte Anschluss 18 wird einem Anschluss 171 der Energieversorgungseinheit 17 zugeführt.

Die Energieversorgungseinheit 17 stellt eine Energieversorgung für das Peripheriegerät 3 über einen Energieausgang 172 bereit. Dazu ist ein Netzteil mit Weitbereichseingang mit einer Ausgangsspannung von 50V und 3A implementiert. Die Abwärme des Netzteils wird durch direkte Montage des Netzteilmoduls auf das Metallgehäuse abgeführt. Das Gehäuse des Switches 1 ist somit gleichzeitig Kühlkörper für das Netzteil. Die Kühlleistung des Gehäuses ds Switches weist mindestens 1K/W auf. Somit kann auf zusätzliche Lüfter oder Heat-Pipes verzichtet werden. Diese Energieversorgung wird als PoE Signal 19 über den Steckverbinder 174 an den zweiten Anschluss 12 des Switches 1 geschaltet und so, über einen Anschluss zusammen mit dem Datensignal des zweiten Datenanschlusses 132 der Kontrolleinheit 13 an das Peripheriegerät 3 bereitgestellt.

Die Energieversorgungseinheit 17 stellt zudem auch eine Energieversorgung für die Kontrolleinheit 13 über einen Energieausgang 173 bereit. Dazu ist ein DC-DC Schaltregler mit einer Ausgangsspannung von 5V und 6A implementiert, der aus dem o.g. Netzteil gespeist wird. Die Energieversorgungen werden beispielsweise über den Verbindungsstecker 174 an die erste Platine 1a weitergeleitet. Auf weitere externe Energiequelle(n) zur Versorgung der Kontrolleinheit 13 oder der Peripheriegeräte 3 kann somit verzichtet werden.

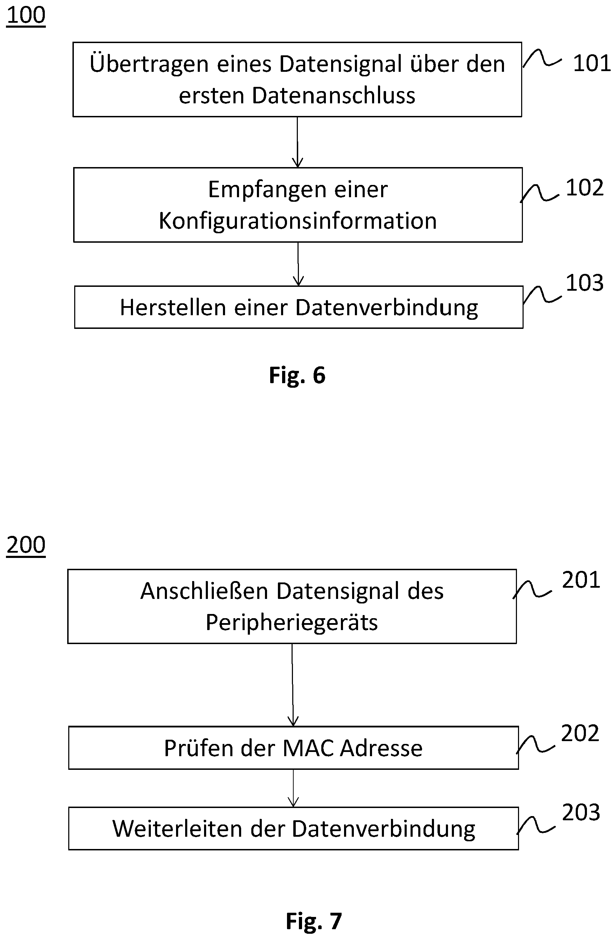

Fig. 6 zeigt ein Ausführungsbeispiel eines Ablaufdiagramms eines erfindungsgemäßen Verfahrens 100 zur Inbetriebnahme einer Vorrichtung 1 der vorher beschriebenen Art. In einem ersten Schritt 103 erfolgt ein Übertragen eines Datensignals über zumindest einen ersten Datenanschluss 11 der Vorrichtung 1 zum Empfangen einer Konfigurationsinformation von einer entfernten Netzwerkkomponente 4, wobei die Vorrichtung 1 bei der entfernten Netzwerkkomponente 4 bekannt ist. Dazu wurde beispielsweise eine ID der Vorrichtung 1 im Backbone 4 hinterlegt. Ist die Vorrichtung 1 in dem Backbone bekannt, sendet das Backbone 4 eine Konfigurationsinformation. In der Vorrichtung 1 wird die Konfigurationsinformation im

Schritt 102 empfangen, wobei bevorzugt das Empfangen 102 mittels Trivial File Transfer Protocol, TFTP, zum Initialisieren der Vorrichtung 1 erfolgt. Im Schritt 103 erfolgt das Herstellen einer Datenverbindung zwischen der Vorrichtung 1 und der entfernten Netzwerkkomponente 4 unter Verwendung der Konfigurationsinformation. Diese Konfigurationsinformationen sind insbesondere IP-Adressen, SSH-Schlüssel, Policy-Einstellungen und ggf. Black-/White-Listen von Vorrichtungen 1.

Fig. 7 zeigt ein Ausführungsbeispiel eines Ablaufdiagramms eines weiteren erfindungsgemäßen Verfahrens 200 zum Betreiben eines Peripheriegeräts 3 an einer hier beschriebenen Vorrichtung 1. Dabei erfolgte eine Inbetriebnahme der Vorrichtung gemäß Fig. 6. Im Schritt 201 erfolgt ein Anschließen eines Datensignals an zumindest einen zweiten Datenanschluss 12 der Vorrichtung 1 zum Verbinden der Vorrichtung 1 mit einem Peripheriegerät 3, wobei das Peripheriegerät 3 vor dem Anschließen bei der entfernten Netzwerkkomponente 4 bekannt gemacht wurde. Das Bekanntmachen erfolgt beispielsweise über das Auslesen eines QR-Codes des Peripheriegeräts 3, durch welches eine MAC Adresse des Peripheriegeräts 3 dem Backbone 4 mitgeteilt wird. Im Schritt 202 erfolgt ein Prüfen der Übereinstimmung der MAC-Adresse des Peripheriegeräts 3

mit einer von der entfernten Netzwerkkomponente 4 mitgeteilten MAC-Adresse durch die Vorrichtung 1. Im Schritt 203 erfolgt ein Weiterleiten einer Datenverbindung der entfernten Netzwerkkomponente 4 an das Peripheriegerät 3, wenn die MAC-Adresse des Peripheriegeräts 3 mit der mitgeteilten MAC-Adresse übereinstimmt.

Fig. 8 zeigt ein maßstabsgetreues Ausführungsbespiel eines beispielhaften Mastes 2, in den eine erfindungsgemäße Vorrichtung 1 angeordnet wird. Der Mast verfügt über drei übereinander angeordnete Mastöffnungen 21, die jeweils mittels dreikantigem Türverschluss abschließbar sind. Jede Mastöffnung 21 ist mit einer Masttür der Größe 100 x 400 Millimeter verschließbar. Das Gehäuse der Vorrichtung muss durch diese Masttür-Größe in das Innere des Mastes 2 eingebracht werden können, sodass die Außenmaße des Gehäuses auf diese Mastöffnungsgrößen beschränkt sind. Der Durchmesser des Mastes 2 am Fuße des Mastes beträgt 246 Millimeter. Im Inneren des Mastes verläuft ein Gerätesteg, beispielsweise als Hutschiene oder als eine Schiene ausgebildet. An diesen Gerätesteg wird das Gehäuse der Vorrichtung angeordnet.

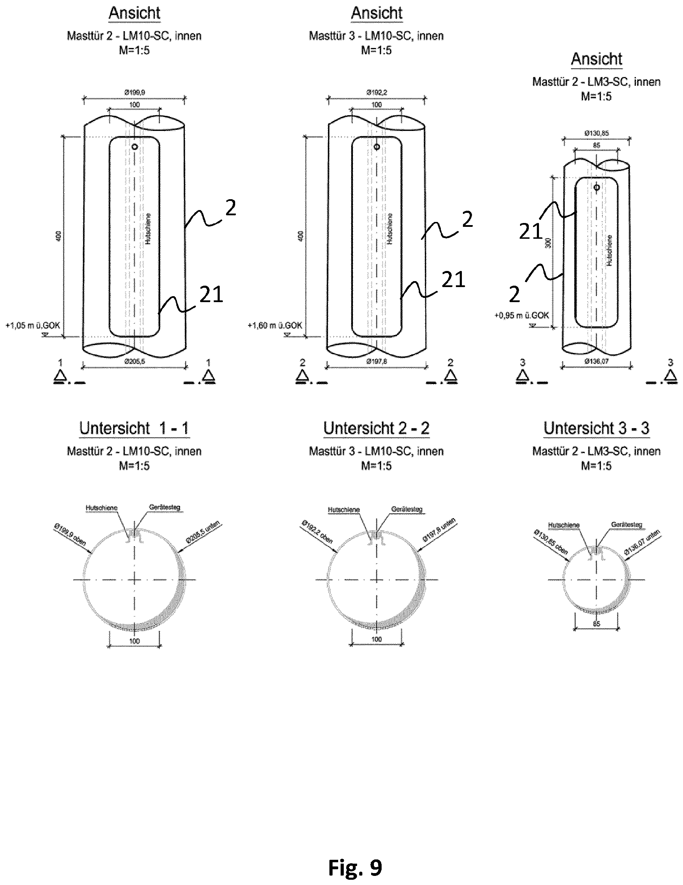

Fig. 9 zeigt drei maßstabsgetreue Ausführungsbespiele für beispielhafte Mastöffnungen 21 in Masten 2, durch die hindurch eine erfindungsgemäße Vorrichtung 1 in einen Mast 2 angeordnet wird. Es ist vorgesehen, nur ein Gehäuse für die Vorrichtung 1 vorzusehen, sodass die Abmessungen der kleinsten Mastöffnung 21, hier die des Masttyps LM3-SC, die Außenmaße des Gehäuses der Vorrichtung beschränken. Beim Masttyp LM3-SC beträgt der Durchmesser in

Höhe der Mastöffnung 21 zwischen 130,85 und 136,07 Millimeter, die Mastöffnung 21 hat eine eine Abmessung von 85x300 Millimeter.

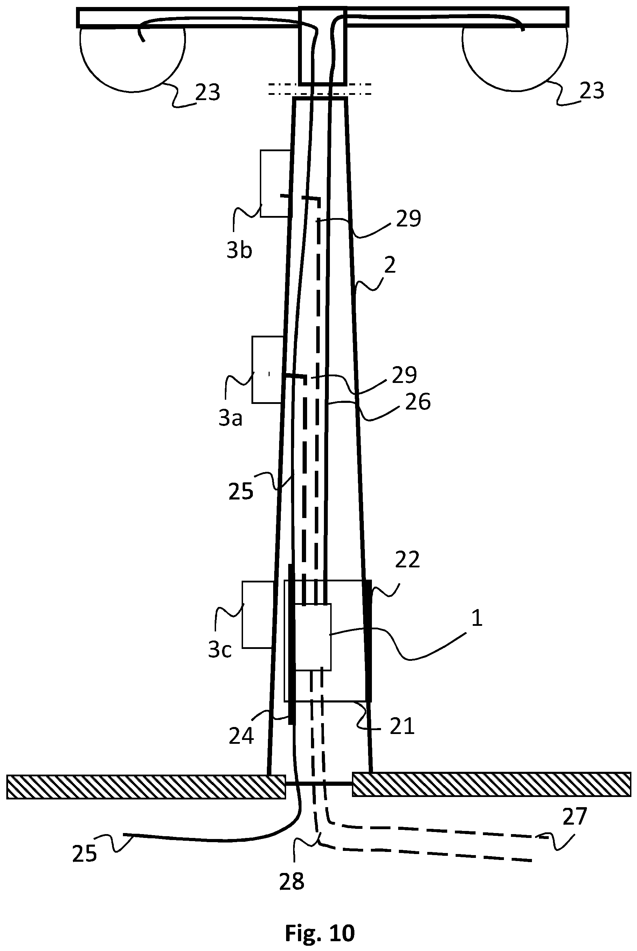

Fig.10 zeigt ein Ausführungsbespiel eines erfindungsgemäßen Systems bestehend aus einem Mast 2 mit darin angeordneter Vorrichtung 1. Der Mast 2 ist dabei bevorzugt ein Mast, wie er in den Fig. 8 oder 9 dargestellt wurde. Die Vorrichtung 1 entspricht einer der Vorrichtungen der Fig. 1 bis 7. Die Vorrichtung 1 ist durch die Mastöffnung 21 in das Innere des Mastes 2 eingebracht und dort an einer Hutschiene 24 mechanisch befestigt, beispielsweise durch eine Krallen-, eine Klemm-, und/oder eine Schraubverbindung. Alternativ kann in einer gut gesicherten Umgebung auch eine Magnetverbindung zum befestigen der Vorrichtung 1 im Inneren des Mastes 2 verwendet werden.

Der Mast 2 hat als Funktionseinheit zwei Beleuchtungsmittel 23. Diese Beleuchtungsmittel 23, beispielsweise LED-Beleuchtungen, sind entweder mit einer eigenen Energieversorgung 25 oder mit einer PoE Versorgung 26 der Vorrichtung 1 verbunden und werden entsprechend darüber mit Energie versorgt.

An den Mast 2 ist ein Peripheriegerät 3b, beispielsweise ein Verkehrssensor, angebracht und mittels Datenverbindung 29 über die Vorrichtung 1 mit einem Backbone verbunden, siehe angedeutete Datenverbindung 27 zum Backbone.

An den Mast 2 ist ein Peripheriegerät 3a, beispielsweise eine Kamera oder ein WLAN-AP, angebracht und mittels Datenverbindung 29 über die Vorrichtung 1 mit einem Backbone verbunden, siehe angedeutete Datenverbindung 27 zum Backbone.

An den Mast 2 ist ein Peripheriegerät 3c, beispielsweise eine Elektrofahrzeug-Ladestation, angebracht und mittels Datenverbindung 29 über die Vorrichtung 1 mit einem Backbone verbunden, siehe angedeutete Datenverbindung 27 zum Backbone.

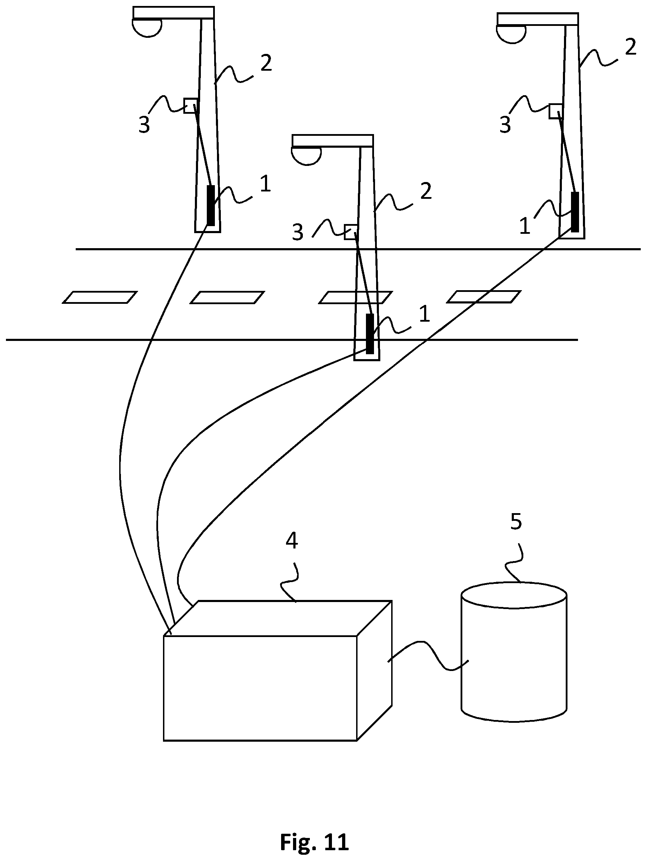

Fig.11 zeigt ein Ausführungsbespiel eines erfindungsgemäßen Systems bestehend aus drei Masten 2 mit jeweiliger Vorrichtung 1 in einer Verkehrsüberwachung, verschaltet in einer Stern-Bus-Topologie. Die Masten 2 sind dabei als Beleuchtungselemente der Straße vorgesehen und jeweils mit einer Vorrichtung 1 ausgestattet. Jeder Mast 2 weist zudem einen Verkehrssensor als Peripheriegerät 3 auf. Die Daten der Verkehrssensoren werden über die Vorrichtung 1 an das Rechenzentrum 4 weitergeleitet. Das Rechenzentrum 4 ist wiederum mit einem Server 5 verbunden, der es Verkehrsteilnehmern ermöglicht, die mittels der Verkehrssensoren aufgezeichneten Daten bzw. daraus resultierende Informationen zu erhalten, beispielsweise über geeignete Schnittstellen in einem Verkehrsmittel (Navigationsgerät) oder ein Benutzerendgerät (Smartphone), und entsprechend einen Fahrweg anzupassen.

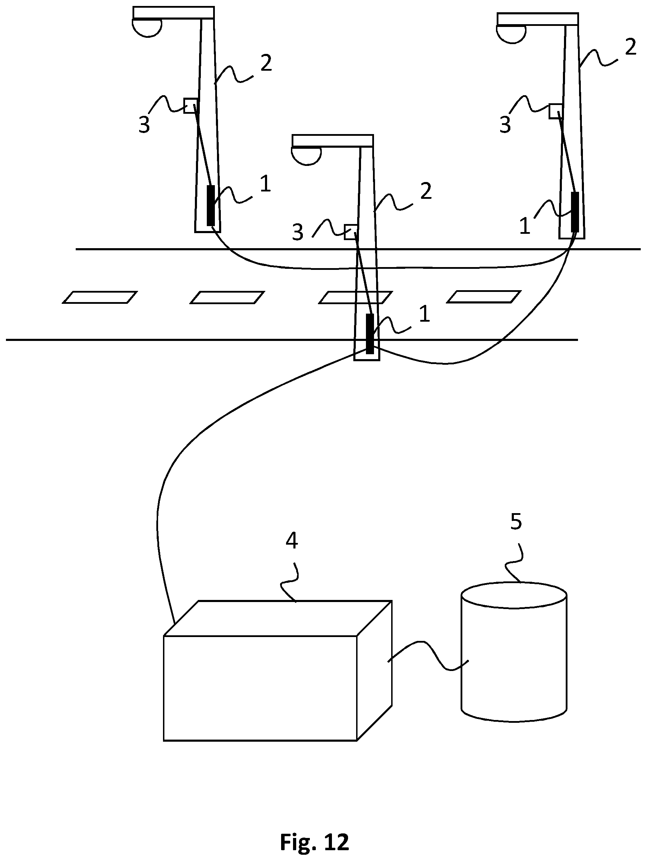

Fig.12 zeigt ein Ausführungsbespiel eines erfindungsgemäßen Systems bestehend aus drei Masten 2 mit jeweiliger Vorrichtung 1 in einer Verkehrsüberwachung, verschaltet in einer Daisy-Chain-Topologie. Hierbei ist der, der entfernten Netzwerkkomponente 4 am nächsten zugeordnete Mast 2 mit der entfernten Netzwerkkomponente 4 verbunden. Die übrigen Masten 2 sind jeweils in Serie untereinander verbunden. Das Signal zu und von einer Vorrichtung 1 im Mast 2 geht nun über seine Vorgänger-Vorrichtung(en) bis zur entfernten Netzwerkkomponente 4 hin. Wichtig ist bei dieser Verschaltung der Vorrichtungen 1, dass Prioritäten vergeben werden können. Somit kann festgelegt werden, dass Informationen zum Beispiel nur dann übermittelt werden können, wenn die Leitung frei ist, oder dass einige Vorrichtungen 1 unbedingten Vorrang gegenüber anderen haben. Dadurch lassen sich Konflikte und Fehlfunktionen verhindern.

### BEZUGSZEICHENLISTE

- 1: Vorrichtung, Netzwerkkomponente, Netzwerkweiche (=Switch)
- 1a: Erste Platine
- 1b: Zweite Platine
11, 11a, 11b Erster Datenanschluss
12, 12a, 12b, 12c, 12d Zweiter Datenanschluss
13 Kontrolleinheit
131, 131a, 131b Erster Datenanschluss
132, 132a, 132b, 132c, 132d Zweiter Datenanschluss
133 Sensorsignalanschluss
134 Zweiter Sensorsignalanschluss
14 Sensor
15 zweiter Sensor
16 Energiespeicher
17 Energieversorgungseinheit
171 Erster Energieanschluss
172 Zweiter Energieanschluss
172 Dritter Energieanschluss
174 Verbindungsanschluss
18 Erster Energieanschluss
19 Energiesignal, PoE
- 2: Mast
21 Mastöffnung
22 Masttür
23 Leuchtmittel, Signal, Ampel
24 Hutschiene
25 Energieversorgung Leuchtmittel/Ladestation
26 Power over Ethernet
27 Datenverbindung zum Backbone
28 Energieversorgung
29 Datenverbindung Peripheriegerät
- 3, 3a, 3b, 3c, 3d: Peripheriegerät, P1, P2, P3, P4
- 4, 4a, 4b: Netzwerkkomponente
- 5: Server

## Patentansprüche

1. Eine aktive Netzwerkkomponente, nämlich ein Netzwerk-Gateway, ein Netzwerk-Router, eine Netzwerkbrücke, ein Modem, eine Netzwerkweiche und/oder ein Netzwerkverteiler, die mittels eines Gehäuses betriebsbereit innerhalb eines Masts (2) angeordnet ist und aufweist:
- einen Sensor (14, 15) am Gehäuse der Netzwerkkomponente eingerichtet zum Bereitstellen eines Sensorsignals; und
- eine Kontrolleinheit (13) im Inneren der Netzwerkkomponente mit:
- zumindest einem ersten Datenanschluss (131) eingerichtet zum Übertragen eines Datensignals zwischen der Netzwerkkomponente und einer vom Mast (2) entfernten Netzwerkkomponente (4);
- zumindest einem zweiten Datenanschluss (132) eingerichtet zum Übertragen eines Datensignals zwischen der Netzwerkkomponente und einem Peripheriegerät (3);
- einem Sensorsignalanschluss (133, 134) zum Empfangen des Sensorsignals;
- wobei die Kontrolleinheit (13) eingerichtet ist zum Weiterleiten einer Datenkommunikation zwischen der entfernten Netzwerkkomponente (4) und dem Peripheriegerät (3);
- wobei die Kontrolleinheit (13) eingerichtet ist zum:
- Auswerten des empfangenen Sensorsignals;
- Erkennen einer Änderung des Sensorsignals; und
- Alarmieren der entfernten Netzwerkkomponente (4), wenn die Änderung des Sensorsignals durch die Kontrolleinheit (13) erkannt wird.

2. Die Netzwerkkomponente nach Anspruch 1, wobei der Sensor (14) ein Sensorsignal in Abhängigkeit eines auf den Sensor (14) einfallenden Lichtes erzeugt, wobei die Änderung des Sensorsignals einen Anstieg der Sensorsignalamplitude aufgrund eines erhöhten Lichteinfalls ist, und/oder wobei das Auswerten des Sensorsignals eine Mittelung der Werte des Sensorsignals über eine vordefinierte Zeitdauer umfasst.

3. Die Netzwerkkomponente nach einem der vorhergehenden Ansprüche, wobei der Sensor (15) ein Bewegungssensor ist, wobei die Änderung des Sensorsignals einen Anstieg der Sensorsignalamplitude aufgrund eines Bewegens des Gehäuses der Vorrichtung (1) ist.

4. Die Netzwerkkomponente nach einem der vorhergehenden Ansprüche, wobei der Sensor (15) ein Schaltelement ist, wobei die Änderung des Sensorsignals einen Anstieg der Sensorsignalamplitude aufgrund eines Öffnens des Gehäuses der Vorrichtung (1) ist.

5. Die Netzwerkkomponente nach einem der vorhergehenden Ansprüche, wobei die Kontrolleinheit (13) eingerichtet ist, zumindest sicherheitsrelevante Informationen, die in einem Speicher der Vorrichtung (1) abgelegt sind, zu löschen und/oder zu überschreiben, wenn die Änderung des Sensorsignals durch die Kontrolleinheit (13) erkannt wird.

6. Die Netzwerkkomponente nach Anspruch 5, wobei die Kontrolleinheit (13) eingerichtet ist, zumindest die sicherheitsrelevanten Informationen erst zu löschen und/oder zu überschreiben, wenn die Änderung des Sensorsignals einen Anstieg der Sensorsignalamplitude aufgrund des Öffnens des Gehäuses der Netzwerkkomponente und/oder aufgrund eines Bewegens des Gehäuses der Netzwerkkomponente ist.

7. Die Netzwerkkomponente nach einem der vorhergehenden Ansprüche, weiter umfassend einen Energiespeicher (16) zum zeitweisen Bereitstellen einer Versorgungsenergie für die Kontrolleinheit (13) bei Wegfall oder Entfernen einer vorrichtungsexternen Energieversorgung.

8. Die Netzwerkkomponente nach einem der vorhergehenden Ansprüche, wobei der zumindest erste Datenanschluss (131) mit einem ersten Anschluss (11) der Netzwerkkomponente verbunden ist, wobei bevorzugt die Kontrolleinheit (13) zumindest zwei erste Datenanschlüsse (131a, 131b) jeweils eingerichtet zum Übertragen eines Datensignals zwischen der Vorrichtung (1) und zumindest der vom Mast (2) entfernten Netzwerkkomponente (4a, 4b) aufweist und wobei weiter bevorzugt jeder erste Datenanschluss (131a, 131b) jeweils mit einem ersten Anschluss (11a, 11b) der Netzwerkkomponente verbunden ist.

9. Die Netzwerkkomponente nach einem der vorhergehenden Ansprüche, wobei der zumindest zweite Datenanschluss (132) mit einem zweiten Anschluss (12) der Netzwerkkomponente verbunden ist, wobei bevorzugt die Kontrolleinheit (13) zumindest vier zweite Datenanschlüsse (132a, 132b, 132c, 132d) jeweils eingerichtet zum Übertragen eines Datensignals zwischen der Vorrichtung (1) und einem Peripheriegerät (3a, 3b, 3c, 3d) aufweist und wobei weiter bevorzugt jeder zweite Datenanschluss (132a, 132b, 132c, 132d) jeweils mit einem zweiten Anschluss (12a, 12b, 12c, 12d) der Netzwerkkomponente verbunden ist.

10. Die Netzwerkkomponente nach einem der vorhergehenden Ansprüche, wobei die Netzwerkkomponente eine Energieversorgungseinheit (17) umfasst, wobei die Energieversorgungseinheit (17) aufweist:
- einen ersten Energieanschluss (171) zum Zuführen einer vorrichtungsexternen Versorgungsenergie;
- zumindest einen zweiten Energieanschluss (172) zum Abgreifen einer Versorgungsenergie für das Peripheriegerät (3), wobei der zweite Energieanschluss (172) ein Power-on-Ethernet, PoE, Energiesignal bereitstellt, das mit dem zu übertragenden Datensignal zwischen Netzwerkkomponente und Peripheriegerät (3) zusammengeführt wird, und/oder
- zumindest einen dritten Energieanschluss (173) zum Abgreifen einer Versorgungsenergie für die Kontrolleinheit (13) aufweist.

11. Die Netzwerkkomponente nach einem der vorhergehenden Ansprüche, wobei die Kontrolleinheit (13) auf einer Leiterplatine (1a) mit Standardformfaktor, bevorzugt PC/104, angeordnet ist, und wobei bevorzugt die Energieversorgungseinheit (17) auf einer zweiten Leiterplatine (1b) mit Standardformfaktor, bevorzugt PC/104, angeordnet ist.

12. Die Netzwerkkomponente nach einem der vorhergehenden Ansprüche, wobei ein Authentifizieren des Peripheriegeräts (3) zum Weiterleiten der Datenkommunikation zwischen der entfernten Netzwerkkomponente (4) und dem Peripheriegerät (3) auf Basis einer Media Access Controll, MAC, Adresse des Peripheriegeräts (3) erfolgt, wobei bevorzugt bei fehlgeschlagener Authentifizierung des Peripheriegeräts (3) das Weiterleiten der Datenkommunikation von der Kontrolleinheit (13) unterbunden wird.

13. Ein Verfahren (100, 200) zum Betreiben eines Peripheriegeräts (3) an einer Netzwerkkomponente gemäß einem der Ansprüche 1 bis 12 durch die Netzwerkkomponente mit den folgenden Verfahrensschritten zur Inbetriebnahme der Netzwerkkomponente:
- Übertragen (101) eines Datensignals über den zumindest einen ersten Datenanschluss (131) der Netzwerkkomponente zum Empfangen einer Konfigurationsinformation von der entfernten Netzwerkkomponente (4), wobei die Netzwerkkomponente bei der entfernten Netzwerkkomponente (4) bekannt ist;
- Empfangen (102) der Konfigurationsinformation von der entfernten Netzwerkkomponente (4) in der Netzwerkkomponente, wobei bevorzugt das Empfangen (102) mittels Trivial File Transfer Protocol, TFTP, zum Initialisieren der Netzwerkkomponente erfolgt;
und
- Herstellen (103) einer Datenverbindung zwischen der Netzwerkkomponente und der entfernten Netzwerkkomponente (4) unter Verwendung der Konfigurationsinformation, wobei nach der Inbetriebnahme der Netzwerkkomponente die folgenden Verfahrensschritte erfolgen:
- Anschließen (201) eines Datensignals an den zumindest einen zweiten Datenanschluss (132) der Netzwerkkomponente zum Verbinden der Netzwerkkomponente mit dem Peripheriegerät (3), wobei das Peripheriegerät (3) vor dem Anschließen bei der entfernten Netzwerkkomponente (4) bekannt gemacht wurde;
- Prüfen (202) der Übereinstimmung der MAC-Adresse des Peripheriegeräts (3) mit einer von der entfernten Netzwerkkomponente (4) mitgeteilten MAC-Adresse durch die Netzwerkkomponente; und
- Weiterleiten (203) einer Datenverbindung der entfernten Netzwerkkomponente (4) an das Peripheriegerät (3), wenn die MAC-Adresse des Peripheriegeräts (3) mit der mitgeteilten MAC-Adresse übereinstimmt

14. Ein Computerprogrammprodukt ausführbar installiert in einer Kontrolleinheit (13) der Netzwerkkomponente gemäß einer der Ansprüche 1 bis 12 und aufweisend Mittel zum Ausführen der Verfahrensschritte (101, 102, 103, 201, 202, 203) des Verfahrens (100, 200) gemäß Anspruch 13.

## Claims

1. An active network component, namely a network gateway, a network router, a network bridge, a modem, a network switch and/or a network distributor, which is arranged operationally within a tower (2) by means of a housing and comprises:
- a sensor (14, 15) arranged on the housing of the network component for providing a sensor signal; and
- a control unit (13) in the interior of the network component with:
- at least one first data connection (131) arranged for transmitting a data signal between the network component and a network component (4) remote from the tower (2);
- at least one second data connection (132) arranged for transmitting a data signal between the network component and a peripheral device (3);
- a sensor signal connection (133, 134) for receiving the sensor signal;
- wherein the control unit (13) is arranged for forwarding a data communication between the remote network component (4) and the peripheral device (3);
- wherein the control unit (13) is arranged for:
- evaluating the received sensor signal;
- detecting a change in the sensor signal; and
- alerting the remote network component (4) if the change in the sensor signal is detected by the control unit (13).

2. The network component according to claim 1, wherein the sensor (14) generates a sensor signal depending on a light incident on the sensor (14), wherein the change in the sensor signal is an increase in the sensor signal amplitude due to an increased incidence of light, and/or wherein the evaluation of the sensor signal comprises an averaging of the values of the sensor signal over a predefined time period.

3. The network component according to one of the preceding claims, wherein the sensor (15) is a motion sensor, wherein the change in the sensor signal is an increase in the sensor signal amplitude due to a movement of the housing of the device (1).

4. The network component according to one of the preceding claims, wherein the sensor (15) is a switching element, wherein the change in the sensor signal is an increase in the sensor signal amplitude due to an opening of the housing of the device (1).

5. The network component according to one of the preceding claims, wherein the control unit (13) is arranged for deleting and/or overwriting at least safety-relevant information stored in a memory of the device (1) if the change in the sensor signal is detected by the control unit (13).

6. The network component according to claim 5, wherein the control unit (13) is arranged for first deleting and/or overwriting at least the safety-relevant information if the change in the sensor signal is an increase in the sensor signal amplitude due to the opening of the housing of the network component and/or due to a movement of the housing of the network component.

7. The network component according to one of the preceding claims, further comprising an energy store (16) for temporarily providing a supply energy for the control unit (13) in the event of the omission or removal of a device-external energy supply.

8. The network component according to one of the preceding claims, wherein the at least one first data connection (131) is connected to a first connection (11) of the network component, wherein preferably the control unit (13) has at least two first data connections (131a, 131b) each arranged for transmitting a data signal between the device (1) and at least the network component (4a, 4b) remote from the tower (2) and wherein further preferably each first data connection (131a, 131b) is connected to a first connection (11a, 11b) of the network component.

9. The network component according to one of the preceding claims, wherein the at least one second data connection (132) is connected to a second connection (12) of the network component, wherein preferably the control unit (13) has at least four second data connections (132a, 132b, 132c, 132d) each arranged for transmitting a data signal between the device (1) and a peripheral device (3a, 3b, 3c, 3d) and wherein further preferably each second data connection (132a, 132b, 132c, 132d) is connected to a second connection (12a, 12b, 12c, 12d) of the network component.

10. The network component according to one of the preceding claims, wherein the network component comprises an energy supply unit (17), wherein the energy supply unit (17) comprises:
- a first energy connection (171) for supplying a device-external supply energy;
- at least one second energy connection (172) for tapping a supply energy for the peripheral device (3), wherein the second energy connection (172) provides a Power-on-Ethernet, PoE, energy signal which is combined with the data signal to be transmitted between the network component and the peripheral device (3), and/or
- at least one third energy connection (173) for tapping a supply energy for the control unit (13).

11. The network component according to one of the preceding claims, wherein the control unit (13) is arranged on a printed circuit board (1a) with standard form factor, preferably PC/104, and wherein preferably the energy supply unit (17) is arranged on a second printed circuit board (1b) with standard form factor, preferably PC/104.

12. The network component according to one of the preceding claims, wherein an authentication of the peripheral device (3) for forwarding the data communication between the remote network component (4) and the peripheral device (3) takes place on the basis of a media access control, MAC, address of the peripheral device (3), wherein preferably in the event of a failed authentication of the peripheral device (3) the forwarding of the data communication is prevented by the control unit (13).

13. A method (100, 200) for operating a peripheral device (3) on a network component according to one of claims 1 to 12 by the network component with the following method steps for starting up the network component:
- transmitting (101) a data signal via the at least one first data connection (131) of the network component for receiving a configuration information from the remote network component (4), wherein the network component is known at the remote network component (4);
- receiving (102) the configuration information from the remote network component (4) in the network component, wherein preferably the receiving (102) takes place by means of trivial file transfer protocol, TFTP, for initializing the network component; and
- establishing (103) a data connection between the network component and the remote network component (4) using the configuration information, wherein after the starting up of the network component the following method steps take place:
- connecting (201) a data signal to the at least one second data connection (132) of the network component for connecting the network component to the peripheral device (3), wherein the peripheral device (3) was made known at the remote network component (4) before the connection;
- checking (202) the match of the MAC address of the peripheral device (3) with a MAC address communicated by the remote network component (4) by the network component; and
- forwarding (203) a data connection of the remote network component (4) to the peripheral device (3) if the MAC address of the peripheral device (3) matches the communicated MAC address.

14. A computer program product installed in a control unit (13) of the network component according to one of claims 1 to 12 and comprising means for carrying out the method steps (101, 102, 103, 201, 202, 203) of the method (100, 200) according to claim 13.

## Revendications

1. Composant de réseau actif, à savoir une passerelle de réseau, un routeur de réseau, un pont entre réseaux, un modem, un commutateur de réseau et/ou un répartiteur de réseau, qui est disposé de manière opérationnelle à l'intérieur d'un pylône (2) au moyen d'un boîtier, et comporte :
- un capteur (14, 15) sur le boîtier du composant de réseau, configuré pour fournir un signal de capteur ; et
- une unité de commande (13) à l'intérieur du composant de réseau comportant :
- au moins un premier port de données (131) configuré pour transmettre un signal de données entre le composant de réseau et un composant de réseau (4) distant du pylône (2) ;
- au moins un second port de données (132) configuré pour transmettre un signal de données entre le composant de réseau et un périphérique (3) ;
- un port de signal de capteur (133, 134) pour recevoir le signal de capteur ;
- dans lequel l'unité de commande (13) est configurée pour transférer une communication de données entre le composant de réseau distant (4) et le périphérique (3) ;
- dans lequel l'unité de commande (13) est configurée pour :
- évaluer le signal de capteur reçu ;
- détecter un changement du signal de capteur ; et
- alerter le composant de réseau distant (4) lorsque le changement du signal de capteur est détecté par l'unité de commande (13).

2. Composant de réseau selon la revendication 1, dans lequel le capteur (14) génère un signal de capteur en fonction d'une lumière incidente sur le capteur (14), dans lequel le changement du signal de capteur est une augmentation de l'amplitude du signal de capteur due à une augmentation de l'incidence de la lumière, et/ou dans lequel l'évaluation du signal de capteur comprend une mise en moyenne des valeurs du signal de capteur sur une durée prédéfinie.

3. Composant de réseau selon l'une des revendications précédentes, dans lequel le capteur (15) est un capteur de mouvement, dans lequel le changement du signal de capteur est une augmentation de l'amplitude du signal de capteur due à un déplacement du boîtier du dispositif (1).

4. Composant de réseau selon l'une des revendications précédentes, dans lequel le capteur (15) est un élément de commutation, dans lequel le changement du signal de capteur est une augmentation de l'amplitude du signal de capteur due à une ouverture du boîtier du dispositif (1).

5. Composant de réseau selon l'une des revendications précédentes, dans lequel l'unité de commande (13) est configurée pour supprimer et/ou écraser au moins des informations relatives à la sécurité qui sont stockées dans une mémoire du dispositif (1), lorsque le changement du signal de capteur est détecté par l'unité de commande (13).

6. Composant de réseau selon la revendication 5, dans lequel l'unité de commande (13) est configurée pour supprimer et/ou écraser au moins les informations relatives à la sécurité uniquement lorsque le changement du signal de capteur est une augmentation de l'amplitude du signal de capteur due à l'ouverture du boîtier du composant de réseau et/ou due à un déplacement du boîtier du composant de réseau.

7. Composant de réseau selon l'une des revendications précédentes, comprenant en outre un accumulateur d'énergie (16) pour fournir temporairement une énergie d'alimentation à l'unité de commande (13) en cas de défaillance ou de retrait d'une alimentation en énergie externe au dispositif.

8. Composant de réseau selon l'une des revendications précédentes, dans lequel le au moins premier port de données (131) est connecté à un premier port (11) du composant de réseau, dans lequel l'unité de commande (13) comporte de préférence au moins deux premiers ports de données (131a, 131b) respectivement configurés pour transmettre un signal de données entre le dispositif (1) et au moins le composant de réseau (4a, 4b) distant du pylône (2) et dans lequel chaque premier port de données (131a, 131b) est en outre de préférence connecté à un premier port (11a, 11b) du composant de réseau.

9. Composant de réseau selon l'une des revendications précédentes, dans lequel le au moins second port de données (132) est connecté à un second port (12) du composant de réseau, dans lequel l'unité de commande (13) comporte de préférence au moins quatre seconds ports de données (132a, 132b, 132c, 132d) respectivement configurés pour transmettre un signal de données entre le dispositif (1) et un périphérique (3a, 3b 3c, 3d), et dans lequel, de préférence, chaque second port de données (132a, 132b, 132c, 132d) est en outre respectivement connecté à un second port (12a, 12b, 12c, 12d) du composant de réseau.

10. Composant de réseau selon l'une des revendications précédentes, dans lequel le composant de réseau comprend une unité d'alimentation en énergie (17), dans lequel l'unité d'alimentation en énergie (17) comporte :
- un premier port d'énergie (171) pour fournir une énergie d'alimentation externe au dispositif ;
- au moins un deuxième port d'énergie (172) pour dévier une énergie d'alimentation pour le périphérique (3), dans lequel le deuxième port d'énergie (172) fournit un signal d'énergie d'alimentation sur Ethernet, PoE, qui est combiné avec le signal de données à transmettre entre le composant de réseau et le périphérique (3), et/ou
- comporte au moins un troisième port d'énergie (173) pour dévier une énergie d'alimentation pour l'unité de commande (13).

11. Composant de réseau selon l'une des revendications précédentes, dans lequel l'unité de commande (13) est disposée sur une carte à circuit imprimé (1a) ayant un facteur de forme standard, de préférence PC/104, et dans lequel l'unité d'alimentation en énergie (17) est disposée de préférence sur une seconde carte à circuit imprimé (1b) ayant un facteur de forme standard, de préférence PC/104.

12. Composant de réseau selon l'une des revendications précédentes, dans lequel une authentification du périphérique (3) est effectuée pour transférer la communication de données entre le composant de réseau distant (4) et le périphérique (3) sur la base d'une adresse de contrôle d'accès au support, MAC, du périphérique (3), dans lequel en cas d'échec de l'authentification du périphérique (3), le transfert de la communication de données à partir de l'unité de commande (13) est de préférence empêché.

13. Procédé (100, 200) pour faire fonctionner un périphérique (3) sur un composant de réseau selon l'une des revendications 1 à 12 par le composant de réseau, comportant les étapes de procédé suivantes pour la mise en service du composant de réseau :
- transmettre (101) un signal de données via le au moins un premier port de données (131) du composant de réseau afin de recevoir une information de configuration du composant de réseau distant (4), dans lequel le composant de réseau est connu du composant de réseau distant (4) ;
- recevoir (102) l'information de configuration du composant de réseau distant (4) dans le composant de réseau, dans lequel la réception (102) s'effectue de préférence au moyen du protocole TFTP (Trivial File Transfer Protocol) afin d'initialiser le composant de réseau ; et
- établir (103) une connexion de données entre le composant de réseau et le composant de réseau distant (4) en utilisant l'information de configuration, dans lequel après la mise en service du composant de réseau, les étapes de procédé suivantes sont mises en œuvre :
- connecter (201) un signal de données au au moins un second port de données (132) du composant de réseau pour connecter le composant de réseau au périphérique (3), dans lequel le périphérique (3) est porté à la connaissance du composant de réseau distant (4) avant la connexion ;
- vérifier (202), par le composant de réseau, la correspondance entre l'adresse MAC du périphérique (3) et une adresse MAC communiquée par le composant de réseau distant (4) ; et
- transférer (203) une connexion de données du composant de réseau distant (4) au périphérique (3) si l'adresse MAC du périphérique (3) correspond à l'adresse MAC communiquée.

14. Produit de programme informatique installé de manière exécutable dans une unité de commande (13) du composant de réseau selon l'une des revendications 1 à 12 et comportant des moyens pour réaliser les étapes de procédé (101, 102, 103, 201, 202, 203) du procédé (100, 200) selon la revendication 13.
